# EUROPEAN PATENT SPECIFICATION

(11) **EP 3 409 680 B1**
(45) Date of publication and mention of the grant of the patent: **06.01.2021**
(21) Application number: 17173445.2
(22) Date of filing: 30.05.2017
(51) Int. Cl.: C07F 9/50

(54) **SYNTHESIS OF BIS(ACYL)PHOSPHINES BY ACTIVATION OF UNREACTIVE METAL PHOSPHIDES**
SYNTHESE VON BIS(ACYL)PHOSPHINEN DURCH AKTIVIERUNG VON NICHT-REAKTIVEN METALLPHOSPHIDEN
SYNTHÈSE DE BIS (ACYLE) PHOSPHINES PAR L'ACTIVATION DE PHOSPHURES MÉTALLIQUES NON RÉACTIVES

(43) Date of publication of application: 05.12.2018
(73) Proprietor: IGM Group B.V., 5145 RM Waalwijk (NL)
(72) Inventor: SOMMERLADE, Reinhard H., 79395 Neuenburg am Rhein (DE); BOULMAAZ, Souad, 4203 Grellingen (CH)
(74) Representative: Maiwald Patent- und Rechtsanwaltsgesellschaft mbH

(56) References cited:
- WO-A1-2006/056541
- WO-A1-2010/121387
- WO-A1-2014/053455
- CN-A- 106 554 430
- DE-A1- 10 105 046
- DE-A1- 10 127 171
- LIOTTA C L ET AL: "The synthesis and reactions of potassium benzoylphosphide, benzoylphosphine and benzoylmethyl- phosphine", TETRAHEDRON LETTERS, ELSEVIER, AMSTERDAM, NL, vol. 25, no. 12, 1 January 1984 (1984-01-01), pages 1249-1252, XP002191367, ISSN: 0040-4039, DOI: 10.1016/S0040-4039(01)80125-8
- ISSLEIB K ET AL: "SEKUNDAERE CARBONSAEUREPHOSPHIDE R-CO-PH-R", ZEITSCHRIFT FUR NATURFORSCHUNG - SECTION B JOURNAL OF CHEMICAL SCIENCES,, vol. 22, no. 7, 1 January 1967 (1967-01-01), page 784/785, XP001053016, ISSN: 0932-0776

## Description

### Field of the invention

The present invention refers to a process for the preparation of a mono(acyl)phosphine of the general formula I and/or a bis(acyl)phosphine of the general formula II, 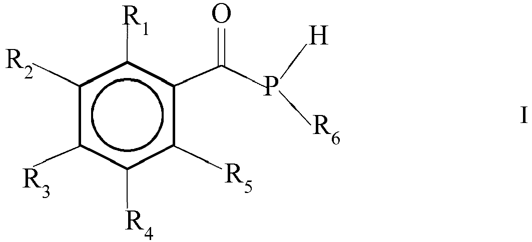 wherein R₁, R₂, R₃, R₄ and R₅ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring; R₆ is H or R₆ is replaced by an alkaline earth metal cation or a mixed alkali metal/alkaline earth metal cation; 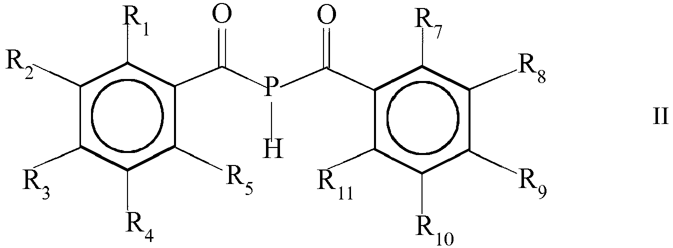 wherein R₁, R₂, R₃, R₄, R₅, R₇, R₈, R₉, R₁₀ and R₁₁ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring; as well as the mono(acyl)phosphine and/or the bis(acyl)phosphine obtained by the process.

### Background of the invention

Mono and bis(acyl)phosphines are known in the state of the art as intermediates which are obtained when preparing mono and bis(acyl)phosphine oxide or mono and bis(acyl)phosphine sulfide compounds. These oxides and sulfides find diverse applications as reactive initiators in the light-induced polymerisation of ethylenically unsaturated compounds. For example, such compounds are known *inter alia* from U.S. Pat. Nos. 4,298,738, 4,737,593, 4,792,632, 5,218,009, 5,399,770, 5,472,992 or 5,534,559 and WO 00/32612 A1 Preparation processes for mono and bis(acyl)phosphines were disclosed i.a. in WO 2006/056541 A1, WO 2010/121387 A1 or WO 2014/053455 A1.

As the technology of the mono and/or bis(acyl)phosphine oxides is becoming increasingly important owing to the excellent photoinitiator properties of these compounds, there is also a need for highly practicable processes involving as little elaboration as possible for the preparation of the required intermediates, especially of the corresponding mono and/or bis(acyl)phosphines.

Therefore, there is a continuous need in the art for providing a competitive and reliable process for the preparation of mono and bis(acyl)phosphines. Furthermore, it is desirable to provide a process for the preparation of mono and/or bis(acyl)phosphines which avoids elaborated processing steps for obtaining the desired mono and/or bis(acyl)phosphines. In addition thereto, it is desirable to provide a process without the need of metallic sodium or lithium in combination with undesirable phosphorus compounds such as an allotrope of phosphorous, e.g. white or red phosphorus, phosphorus trichloride, alkyl or aryl phosphine, or dialkyl or diaryl phosphine, because of their volatility, bad smell, toxicity and susceptibility to air and fire. Furthermore, it is desirable to provide a process which allows the preparation of mono and/or bis(acyl)phosphines which are not accessible by the processes of the prior art. Accordingly, it is an object of the present invention to provide a process for the preparation of mono and/or bis(acyl)phosphines. It is an even further object of the present invention to provide a competitive and reliable process for the preparation of mono and/or bis(acyl)phosphines without elaborate processing steps for obtaining the desired mono and/or bis(acyl)phosphines. It is an even further object of the present invention to provide a process for the preparation of mono and/or bis(acyl)phosphines which avoids the use of metallic sodium or lithium in combination with undesirable phosphorus compounds such as white phosphorus, red phosphorus, phosphorus trichloride, alkyl or aryl phosphine, or dialkyl or diaryl phosphine. It is another object of the present invention to provide a process which allows for the preparation of mono and/or bis(acyl)phosphines which are not accessible starting from easily available and cheap phosphorus sources a in a single step by the processes of the prior art.

### Summary of the invention

The foregoing and other objects are solved by the subject matter of the present invention.

According to a first aspect of the present invention, a process for the preparation of a mono(acyl)phosphine of the general formula I and/or a bis(acyl)phosphine of the general formula II is provided, 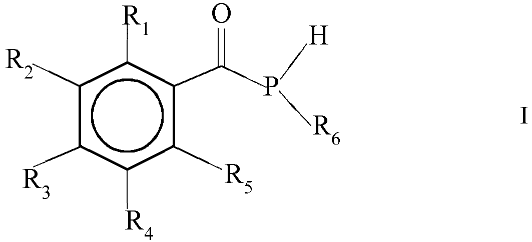 wherein R₁, R₂, R₃, R₄ and R₅ are the same or different and are independently selected from H, halogen, linear or branched C₁-C₂₀-alkyl, linear or branched C₂-C₈-alkenyl, C₁-Cs-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl, SR₁₄, NHR₁₄ or NR₁₄R₁₅ with R₁₄ and R₁₅ being independently selected from H, linear or branched C₁-C₂₀-alkyl, linear or branched C₂-Cs-alkenyl and C₃-C₈-cycloalkyl, and an O-, S- or N-containing 5- or 6-membered heterocyclic ring; R₆ is H or R₆ is replaced by an alkaline earth metal cation or a mixed alkali metal/alkaline earth metal cation, 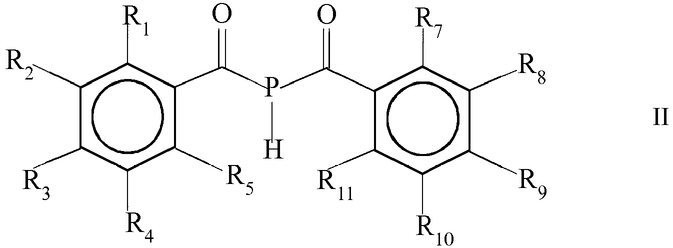 wherein R₁, R₂, R₃, R₄, R₅, R₇, R₈, R₉, R₁₀ and R₁₁ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring; the process comprising the steps of
a) contacting a metal phosphide selected from the group consisting of Ca₃P₂, Zn₃P₂, AIP, Fe₃P, Ni₃P₂, Sr₃P₂, Ba₃P₂, Co₃P₂, ScP, Ti3P4, Sn3P4, WP2, LaP, Pb₃P₂, BiP, and mixtures thereof or a mixed metal phosphide being an iron cobalt phosphide or a zirconium niobium phosphide, with a chelating agent,
b) contacting the mixture obtained in step a) with a compound of the general formula IIIa and/or IIIb, 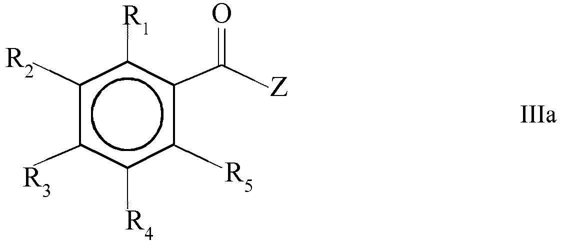 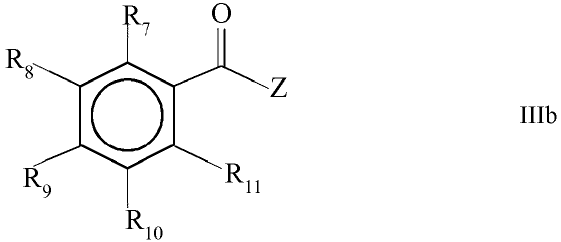
c) wherein R₁, R₂, R₃, R₄ and R₅ and/or R₇, R₈, R₉, R₁₀ and R₁₁ are as defined above; Z is selected from halogen, C₁-C₂₀-alkylcarboxy, C₆-C₁₂-arylcarboxy, C₁-C₈-alkoxy and C₆-C₁₂-aryloxy, and acidifying the mixture obtained in step b).

The inventors surprisingly found out that such a process is suitable for the preparation of mono and/or bis(acyl)phosphines and avoids elaborate processing steps for obtaining the desired mono and/or bis(acyl)phosphines. Furthermore, the process is competitive and reliable. Furthermore, the process allows the preparation of the mono and/or bis(acyl)phosphines without the use of metallic sodium or lithium in combination with undesirable phosphorus compounds such as white phosphorus, red phosphorus, phosphorus trichloride, alkyl or aryl phosphine, or dialkyl or diaryl phosphine. In addition thereto, the process allows the preparation of mono and/or bis(acyl)phosphines which are not accessible by the processes of the prior art.

Advantageous embodiments of the inventive process are defined in the corresponding sub-claims.

According to one embodiment, R₁, R₃ and R₅ and/or R₇, R₉ and R₁₁ are the same.

According to another embodiment, R₁, R₃ and R₅ and/or R₇, R₉ and R₁₁ are the same and are selected from linear or branched C₁-C₂₀-alkyl, preferably linear or branched C₁-C₁₈-alkyl, more preferably linear or branched C₁-C₁₂-alkyl and most preferably linear C₁-C₈-alkyl.

According to yet another embodiment, R₂ and R₄ and/or R₈ and R₁₀ are the same, preferably R₂ and R₄ and/or R₈ and R₁₀ are different from R₁, R₃ and R₅ and/or R₇, R₉ and R₁₁.

According to one embodiment, R₂ and R₄ and/or R₈ and R₁₀ are the same and are H.

According to another embodiment, Z is a halogen, preferably selected from fluoro, chloro, bromo and iodo, more preferably chloro.

According to yet another embodiment, the metal phosphide is selected from the group comprising Ca₃P₂, Zn₃P₂, AIP, Fe₃P, and mixtures thereof, preferably from the group comprising Ca₃P₂, Zn₃P₂, AIP and mixtures thereof.

According to one embodiment, the chelating agent has the capability of complexing cations such as Ca²⁺, Zn²⁺, Al⁺, Fe³⁺ and mixtures thereof.

According to another embodiment, the chelating agent is selected from the group comprising 1,2-dimethoxyethane (DME), 1,2-diethoxyethane (DEE), 1,2-dihydroxypropane, 1,3-dihydroxypropane, 1,2-dimethoxypropane, 1,3-dimethoxypropane, glycerol, 1,3-dioxane, 1,4-dioxane, tris(2-aminoethyl)amine, tris[2-(dimethylamino)ethyl]amine, diethylene glycol dim ethyl ether (Diglyme), triethylene glycol dimethyl ether (Triglyme), N,N,N',N'-tetramethylethylendiamine (TMEDA), ethylenediaminetetraacetic acid (EDTA) and mixtures thereof.

According to yet another embodiment, an alcohol is further added into step a), preferably an alcohol selected from the group comprising methanol, ethanol, n-propanol, iso-propanol, n-butanol, iso-butanol, tert-butanol, n-amyl alcohol, sec-amyl alcohol, tert-amyl alcohol, 3-methyl-3-pentanol, ethylenglycol, 1,2,3-propantriol, ethanolamine, diethanolamine, triethanolamine and mixtures thereof, more preferably the alcohol is selected from the group comprising tert-butanol, sec-amyl alcohol, tert-amyl alcohol, 3-methyl-3-pentanol and mixtures thereof.

According to one embodiment, an additive selected from the group comprising potassium tert-butoxide, trisodium α-DL-alanine diacetate, trimethylamine, triethylamine and mixtures thereof, is further added into step a) and/or b).

According to another embodiment, step a) is carried out at a temperature in the range from 10 to 50 °C, preferably in the range from 12 to 40 °C, more preferably in the range from 15 to 30 °C, and most preferably in the range from 15 to 28 °C and/or step b) is carried out at a temperature in the range from -5 to 50 °C, preferably in the range from 0 to 40 °C, more preferably in the range from 0 to 30 °C, and most preferably in the range from 0 to 28 °C.

According to yet another embodiment, the process comprises a further step d) of alkylating, alkoxylating, alkenylating, alkenoxylating, arylating, acylating, carboxylating, cycloalkylating, cycloalkoxylating, arylalkoxylating, alkenylarylalkoxylating or hydroxylating and subsequently oxidizing the bis(acyl)phosphine of the general formula II obtained in step c) for obtaining a bis(acyl)phosphine of the general formula IV 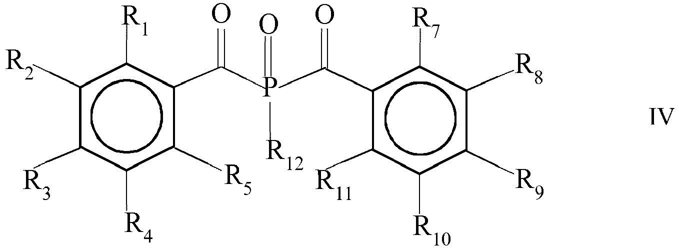 wherein R₁, R₂, R₃, R₄, R₅, R₇, R₈, R₉, R₁₀ and R₁₁ are as defined above, and R₁₂ is selected from the group comprising OH, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₁-C₈-acyl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl and an O-, S- or N-containing 5- or 6-membered heterocyclic ring.

According to one embodiment, the oxidizing is carried out by using hydrogen peroxide.

According to another embodiment, the process comprises a further step d) of alkylating, alkoxylating, alkenylating, alkenoxylating, arylating, acylating, carboxylating, cycloalkylating, cycloalkoxylating, arylalkoxylating, alkenylarylalkoxylating or hydroxylating the mono(acyl)phosphine of the general formula I obtained in step c) for obtaining the mono(acyl)phosphine of the general formula V 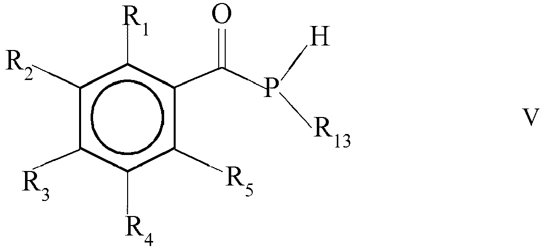 wherein R₁, R₂, R₃, R₄ and R₅ are as defined above, and R₁₃ is selected from the group comprising OH, linear or branched C₁-C₂₀-alkyl, linear or branched C₂-C₈-alkenyl, C₁-Cs-alkoxy, C₂-C₈-alkenyloxy, C₃-C₈-cycloalkyl, C₆-C₁₂-aryl, C₁-C₈-acyl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl and an O-, S- or N-containing 5- or 6-membered heterocyclic ring.

In the following, the details and preferred embodiments of the inventive process for the preparation of the mono(acyl)phosphine and/or the bis(acyl)phosphine will be described in more detail.

### Detailed description of the invention

A process for the preparation of a mono(acyl)phosphine and/or a bis(acyl)phosphine is provided as defined by the appended claims. It is appreciated that a mono(acyl)phosphine of the general formula I and/or a bis(acyl)phosphine of the general formula II is prepared, 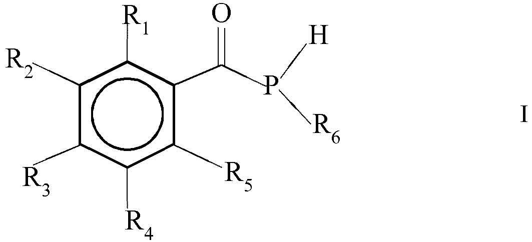
wherein R₁, R₂, R₃, R₄ and R₅ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring;
R₆ is H or R₆ is replaced by an alkaline earth metal cation or a mixed alkali metal/alkaline earth metal cation; 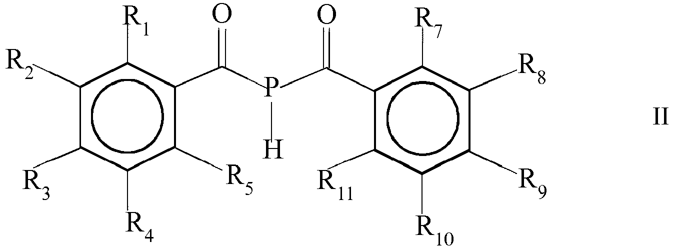 wherein R₁, R₂, R₃, R₄, R₅, R₇, R₈, R₉, R₁₀ and R₁₁ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring.

As regards R₁, R₂, R₃, R₄ and R₅ in the general formula I and/or II, it is to be noted that they can be the same or different. Preferably, R₁, R₂, R₃, R₄ and R₅ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring.

The term "linear or branched C₁-C₂₀-alkyl" in the meaning of the present invention refers to a linear or branched chain alkyl group having 1 to 20 carbon atoms, and includes, for example, methyl, ethyl, propyl, isopropyl, n-butyl, isobutyl, sec. butyl, tert. butyl, n-pentyl, isopentyl, neopentyl, hexyl, heptyl, octyl, 2-ethylhexyl, 1,1,3,3-tetramethylbutyl, n-heptyl, 2,4,4 trimethylpentyl, 2-ethylhexyl, octyl, nonyl, decyl, undecyl, dodecyl, tetradecyl, pentadecyl, hexadecyl, heptadecyl, octadecyl, nonadecyl and eicosyl.

The term "linear or branched C₂-C₈-alkenyl" in the meaning of the present invention refers to a linear or branched chain alkenyl group having 2 to 8 carbon atoms, and includes, for example, ethenyl, propenyl, butenyl, triisobutenyl, pentenyl, hexenyl, heptenyl and octenyl, preferably ethenyl or propenyl. The term "alkenyl" in the meaning of the present invention includes the cis and trans isomers.

The term "C₁-C₈-alkoxy" in the meaning of the present invention means that the alkoxy moiety has a linear or branched chain alkyl having 1 to 8 carbon atoms, and includes, for example, methoxy, ethoxy, propoxy, isopropoxy, butoxy, isobutoxy, tertiary butoxy, pentyloxy, hexyloxy, heptyloxy and octyloxy.

The term "C₂-C₈-alkenyloxy" in the meaning of the present invention means that the alkenyloxy moiety has a linear or branched chain alkenyl having 2 to 8 carbon atoms, and includes, for example, ethenyloxy, propenyloxy, butenyloxy, triisobutenyloxy, pentenyloxy, hexenyloxy, heptenyloxy and octenyloxy.

The term "C₃-C₃-cycloalkyl" in the meaning of the present invention refers to a cyclic alkyl having 3 to 8 carbon atoms, and includes, for example, cyclopropyl, cyclobutyl, cyclopentyl, cyclohexyl, and cycloheptyl, preferably cyclopentyl and cyclohexyl.

The term "C₆-C₁₂-aryl" in the meaning of the present invention refers to a group containing one or more 6-membered unsaturated hydrocarbon ring(s), wherein the unsaturation is represented formally by conjugated double bonds and which may optionally be substituted at one or more carbon atoms of such ring(s) by independently selected alkyl groups, and includes, for example, phenyl, naphthyl, methylphenyl, dimethoxyphenyl, 5-isopropyl-2-methylphenyl, methylphenyl and t-butylphenyl, preferably naphthyl.

The term "C₃-C₈-cycloalkoxy" in the meaning of the present invention means that the cycloalkoxy moiety has a cyclic alkyl having 3 to 8 carbon atoms, and includes, for example, cyclopropyloxy, cyclobutyloxy, cyclopentyloxy, cyclohexyloxy, and cycloheptyloxy, preferably cyclopentyloxy and cyclohexyloxy.

The term "C₇-C₁₂-arylalkoxy" in the meaning of the present invention means that the alkoxy moiety has a linear or branched chain alkyl having 1 to 8 carbon atoms, preferably 1 or 2 carbon atoms, which is connected to C₆-C₁₂-aryl.

The term "C₉-C₁₅-alkenylarylalkoxy" in the meaning of the present invention means that the alkoxy moiety has a linear or branched chain alkyl having 1 to 8 carbon atoms, preferably 1 or 2 carbon atoms, which is connected to C₆-C₁₂-aryl, preferably C₆-aryl, which is further connected to linear or branched C₂-C₈-alkenyl, preferably C₂- alkenyl. Preferably, the alkoxy and alkenyl moieties are connected in para-position of the aryl moiety.

The term "C₆-C₁₂-arylsulfonyl" in the meaning of the present invention refers to a sulfonyl moiety having a C₆-C₁₂-aryl.

The term "4-alkylarylsulfonyl" in the meaning of the present invention refers to a sulfonyl moiety having a C₆-C₁₂-aryl, which is connected to a linear or branched C₁-C₂₀-alkyl. The alkyl moiety is connected in para-position of the aryl moiety.

The term "halogen" in the meaning of the present invention refers to fluoro, chloro, bromo or iodo.

Preferably, R₁, R₂, R₃, R₄ and R₅ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl and an O-, S- or N-containing 5- or 6-membered heterocyclic ring.

In one embodiment, R₁, R₂, R₃, R₄ and R₅ in the general formula I and/or II are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl and C₆-C₁₂-aryl. Preferably, R₁, R₂, R₃, R₄ and R₅ are the same or different and are independently selected from H, halogen and, linear or branched C₁-C₂₀-alkyl. Most preferably, R₁, R₂, R₃, R₄ and R₅ are the same or different and are independently selected from H and, linear or branched C₁-C₂₀-alkyl.

Thus, it is preferred that one or more of R₁, R₂, R₃, R₄ and R₅ is/are H.

Additionally or alternatively, it is preferred that one or more of R₁, R₂, R₃, R₄ and R₅ is/are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl. For example, one or more of R₁, R₂, R₃, R₄ and R₅ is/are linear or branched C₁-C₆-alkyl, e.g. linear C₁-C₆-alkyl, preferably linear or branched C₁-C₄-alkyl, e.g. linear C₁-C₄-alkyl,and most preferably linear or branched C₁-C₃-alkyl, e.g. linear C₁-C₃-alkyl. It is especially preferred that one or more of R₁, R₂, R₃, R₄ and R₅ is/are C₁- or C₂-alkyl, e.g. C₁-alkyl.

Preferably, R₁, R₃ and R₅ are the same. In this embodiment, R₁, R₃ and R₅ are preferably selected from H, halogen, linear or branched C₁-C₈-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring. For example, R₁, R₃ and R₅ are the same and are selected from linear or branched C₁-C₈-alkyl, linear or branched C₂-C₈-alkenyl, C₁-C₈-alkoxy, C₂-C₃-alkenyloxy, C₃-C₈-cycloalkyl and an O-, S- or N-containing 5- or 6-membered heterocyclic ring.

In one embodiment, R₁, R₃ and R₅ are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl. For example, R₁, R₃ and R₅ are the same and are linear or branched C₁-C₆-alkyl, e.g. linear C₁-C₆-alkyl, preferably linear or branched C₁-C₄-alkyl,e.g. linear C₁-C₄-alkyl, and most preferably linear or branched C₁-C₃-alkyl, e.g. linear C₁-C₃-alkyl. It is especially preferred that R₁, R₃ and R₅ are the same and are C₁- or C₂-alkyl, e.g. C₁-alkyl.

In one embodiment, R₁, R₃ and R₅ are the same and are SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl.

In one embodiment, R₂ and R₄ are the same. In this embodiment, R₂ and R₄ are preferably selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring. Preferably, R₂ and R₄ are selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring. For example, R₂ and R₄ are the same and are selected from H, linear or branched C₁-C₂₀-alkyl, linear or branched C₂-C₈-alkenyl, C₁-C₈-alkoxy, C₂-C₈-alkenyloxy, C₃-C₈-cycloalkyl and an O-, S- or N-containing 5- or 6-membered heterocyclic ring.

In one embodiment, R₂ and R₄ are the same and are H.

It is appreciated that R₂ and R₄ are preferably different from R₁, R₃ and R₅. Thus, if R₂ and R₄ are different from R₁, R₃, and R₅, R₂ and R₄ are preferably the same and are H and R₁, R₃ and R₅ are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl. For example, R₂ and R₄ are the same and are H and R₁, R₃ and R₅ are the same and are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl. It is especially preferred that R₂ and R₄ are the same and are H and R₁, R₃ and R₅ are the same and are C₁- or C₂-alkyl, e.g. C₁-alkyl.

In one embodiment, R₂ and R₄ are the same and are H and R₁, R₃ and R₅ are the same and are SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl.

As regards R₇, R₈, R₉, R₁₀ and R₁₁ in the general formula II, it is to be noted that they can be the same or different. Preferably, R₇, R₈, R₉, R₁₀ and R₁₁ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring. More preferably, R₇, R₈, R₉, R₁₀ and R₁₁ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring.

In one embodiment, R₇, R₈, R₉, R₁₀ and R₁₁ in the general formula II are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl and C₆-C₁₂-aryl. Preferably, R₇, R₈, R₉, R₁₀ and R₁₁ are the same or different and are independently selected from H, halogen and, linear or branched C₁-C₂₀-alkyl. Most preferably, R₇, R₈, R₉, R₁₀ and R₁₁ are the same or different and are independently selected from H and, linear or branched C₁-C₂₀-alkyl.

Thus, it is preferred that one or more of R₇, R₈, R₉, R₁₀ and R₁₁ is/are H.

Additionally or alternatively, it is preferred that one or more of R₇, R₈, R₉, R₁₀ and R₁₁ is/are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl. For example, one or more of R₇, R₈, R₉, R₁₀ and R₁₁ is/are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl. It is especially preferred that one or more of R₇, R₈, R₉, R₁₀ and R₁₁ is/are C₁- or C₂-alkyl, e.g. C₁-alkyl.

Preferably, R₇, Rg and R₁₁ are the same. In this embodiment, R₇, R₉ and R₁₁ are preferably selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring. Preferably, R₇, R₉ and R₁₁ are selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring. For example, R₇, R₉ and R₁₁ are the same and are selected from linear or branched C₁-C₂₀-alkyl, linear or branched C₂-C₈-alkenyl, C₁-C₈-alkoxy, C₂-C₈-alkenyloxy, C₃-C₈-cycloalkyl and an O-, S- or N-containing 5- or 6-membered heterocyclic ring.

In one embodiment, R₇, R₉ and R₁₁ are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl. For example, R₇, Rg and R₁₁ are the same and are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl. It is especially preferred that R₇, Rg and R₁₁ are the same and are C₁- or C₂-alkyl, e.g. C₁-alkyl.

In one embodiment, R₇, Rg and R₁₁ are the same and are SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl.

In one embodiment, R₈ and R₁₀ are the same. In this embodiment, R₈ and R₁₀ are preferably selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring. Preferably, R₈ and R₁₀ are selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring. For example, R₈ and R₁₀ are the same and are selected from H, linear or branched C₁-C₂₀-alkyl, linear or branched C₂-C₈-alkenyl, C₁-C₈-alkoxy, C₂-C₈-alkenyloxy, C₃-C₈-cycloalkyl and an O-, S- or N-containing 5- or 6-membered heterocyclic ring.

In one embodiment, R₈ and R₁₀ are the same and are H.

It is appreciated that R₈ and R₁₀ are preferably different from R₇, Rg and R₁₁. Thus, if R₈ and R₁₀ are different from R₇, Rg and R₁₁, R₈ and R₁₀ are preferably the same and are H and R₇, R₉ and R₁₁ are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl. For example, R₈ and R₁₀ are the same and are H and R₇, R₉ and R₁₁ are the same and are linear or branched C₁-C₆-alkyl, e.g. linear C₁-C₆-alkyl, preferably linear or branched C₁-C₄-alkyl,e.g. linear C₁-C₄-alkyl, and most preferably linear or branched C₁-C₃-alkyl, e.g. linear C₁-C₃-alkyl. It is especially preferred that R₈ and R₁₀ are the same and are H and R₇, Rg and R₁₁ are the same and are C₁- or C₂-alkyl, e.g. C₁-alkyl.

In one embodiment, R₈ and R₁₀ are the same and are H and R₇, R₉ and R₁₁ are the same and are SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl.

As regards R₁, R₂, R₃, R₄, R₅, R₇, R₈, R₉, R₁₀ and R₁₁ in general formula II, it is to be noted that they can be the same or different. Preferably, R₁, R₂, R₃, R₄, R₅, R₇, R₈, Rg, R₁₀ and R₁₁ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring.

In one embodiment, R₁, R₂, R₃, R₄, R₅, R₇, R₈, R₉, R₁₀ and R₁₁ in the general formula II are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl and C₆-C₁₂-aryl. Preferably, R₁, R₂, R₃, R₄, R₅, R₇, R₈, R₉, R₁₀ and R₁₁ are the same or different and are independently selected from H, halogen and, linear or branched C₁-C₂₀-alkyl. Most preferably, R₁, R₂, R₃, R₄, R₅, R₇, R₈, R₉, R₁₀ and R₁₁ are the same or different and are independently selected from H and, linear or branched C₁-C₂₀-alkyl.

In one embodiment, R₁, R₂, R₃, R₄, R₅, R₇, R₈, R₉, R₁₀ and R₁₁ in general formula II are the same. In this embodiment, R₁, R₂, R₃, R₄, R₅, R₇, R₈, R₉, R₁₀ and R₁₁ are preferably H.

Alternatively, R₁, R₂, R₃, R₄, R₅, R₇, R₈, R₉, R₁₀ and R₁₁ in general formula II are different.

It is preferred that one or more of R₁, R₂, R₃, R₄, R₅, R₇, R₈, R₉, R₁₀ and R₁₁ in general formula II is/are H.

Additionally or alternatively, it is preferred that one or more of R₁, R₂, R₃, R₄, R₅, R₇, R₈, R₉, R₁₀ and R₁₁ in general formula II is/are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl. For example, one or more of R₁, R₂, R₃, R₄, R₅, R₇, R₈, R₉, R₁₀ and R₁₁ is/are linear or branched C₁-C₆-alkyl, e.g. linear C₁-C₆-alkyl, preferably linear or branched C₁-C₄-alkyl,e.g. linear C₁-C₄-alkyl,and most preferably linear or branched C₁-C₃-alkyl, e.g. linear C₁-C₃-alkyl. It is especially preferred that one or more of R₁, R₂, R₃, R₄, R₅, R₇, R₈, R₉, R₁₀ and R₁₁ in general formula II is/are C₁- or C₂-alkyl, e.g. C₁-alkyl.

Preferably, R₁, R₃, R₅, R₇, R₉ and R₁₁ in general formula II are the same. In this embodiment, R₁, R₃, R₅, R₇, R₉ and R₁₁ are selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring. Preferably, R₁, R₃, R₅, R₇, R₉ and R₁₁ are the same and are selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, and an O-, S- or N-containing 5- or 6-membered heterocyclic ring. For example, R₁, R₃, R₅, R₇, R₉ and R₁₁ are the same and are selected from linear or branched C₁-C₂₀-alkyl, linear or branched C₂-C₈-alkenyl, C₁-C₈-alkoxy, C₂-C₈-alkenyloxy, C₃-C₈-cycloalkyl and an O-, S- or N-containing 5- or 6-membered heterocyclic ring.

In one embodiment, R₁, R₃, R₅, R₇, R₉ and R₁₁ in general formula II are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl. For example, R₁, R₃, R₅, R₇, R₉ and R₁₁ are the same and are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl. It is especially preferred that R₁, R₃, R₅, R₇, R₉ and R₁₁ are the same and are C₁- or C₂-alkyl, e.g. C₁-alkyl.

In one embodiment, R₂, R₄, R₈ and R₁₀ in general formula II are the same. In this embodiment, R₂, R₄, R₈ and R₁₀ are selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring. For example, R₂, R₄, R₈ and R₁₀ are the same and are selected from H, linear or branched C₁-C₂₀-alkyl, linear or branched C₂-C₈-alkenyl, C₁-C₈-alkoxy, C₂-C₈-alkenyloxy, C₃-C₈-cycloalkyl and an O-, S- or N-containing 5- or 6-membered heterocyclic ring.

In one embodiment, R₂, R₄, R₈ and R₁₀ are the same and are H.

It is appreciated that R₂, R₄, R₈ and R₁₀ are preferably different from R₁, R₃, R₅, R₇, R₉ and R₁₁. Thus, if R₂, R₄, R₈ and R₁₀ are different from R₁, R₃, R₅, R₇, R₉ and R₁₁, R₂, R₄, R₈ and R₁₀ are preferably the same and are H and R₁, R₃, R₅, R₇, R₉ and R₁₁ are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl. For example, R₂, R₄, R₈ and R₁₀ are the same and are H and R₁, R₃, R₅, R₇, R₉ and R₁₁ are the same and are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl. It is especially preferred that R₂, R₄, R₈ and R₁₀ are the same and are H and R₁, R₃, R₅, R₇, R₉ and R₁₁ are the same and are C₁- or C₂-alkyl, e.g. C₁-alkyl.

As regards R₆ in general formula I, it is to be noted that R₆ is H. Alternatively, R₆ is replaced by an alkaline earth metal cation or a mixed alkali metal/alkaline earth metal cation, preferably an alkaline earth metal cation.

Preferably, R₆ in general formula I is H.

The term "alkaline earth metal cation" in the meaning of the present invention preferably refers to magnesium, calcium or strontium cations, more preferably magnesium or calcium cations and most preferably calcium cations.

The term "mixed alkali metal/alkaline earth metal cation" in the meaning of the present invention if not specifically defined, as for step a), preferably refers to sodium magnesium, lithium magnesium, potassium magnesium, sodium calcium, lithium calcium, potassium calcium, sodium strontium lithium strontium or potassium strontium cations, more preferably lithium magnesium or lithium calcium cations and most preferably lithium calcium cations.

In one embodiment, the bis(acyl)phosphine of the general formula II is a bis(acyl)phosphine, in which R₁, R₃, R₅, R₇, R₉ and R₁₁ in general formula II are the same and R₂, R₄, R₈ and R₁₀ are the same. Preferably, R₁, R₃, R₅, R₇, R₉ and R₁₁ in general formula II are the same and are C₁-alkyl and R₂, R₄, R₈ and R₁₀ are the same and are H.

Alternatively, the bis(acyl)phosphine of the general formula II is a bis(acyl)phosphine, in which R₁, R₃ and R₅ in general formula II are the same, R₇, R₉ and R₁₁ are the same, R₂ and R₄ are the same and R₈ and R₁₀ are the same. In this embodiment, R₁, R₃ and R₅ in general formula II are different from R₇, R₉ and R₁₁ and R₂ and R₄ are different from R₈ and R₁₀. It is thus appreciated that a mixed bis(acyl)phosphine can be prepared by the process of the present invention.

Alternatively, the bis(acyl)phosphine of the general formula II is a bis(acyl)phosphine, in which R₁ and R₅ in general formula II are the same, R₇ and R₁₁ are the same, R₂, R₃ and R₄ are the same and R₈, R₃ and R₁₀ are the same. In this embodiment, R₁ and R₅ in general formula II are different from R₇ and R₁₁ and R₂, R₃, R₄, R₈, R₉ and R₁₀ are the same or different, preferably the same.

For example, the bis(acyl)phosphine of the general formula II is a bis(acyl)phosphine, in which R₁ and R₅ in general formula II are the same and are chloro, R₇ and R₁₁ are the same and are methoxy, R₂, R₃ and R₄ are the same and are H and R₈, R₉ and R₁₀ are the same and are H.

Thus, it is appreciated that the process of the present invention results in the preparation of the mono(acyl)phosphine of the general formula I or the bis(acyl)phosphine of the general formula II. More preferably, a mixture of the mono(acyl)phosphine of the general formula I and the bis(acyl)phosphine of the general formula II is obtained.

It is to be noted that the formation of the mono(acyl)phosphine of the general formula I and the bis(acyl)phosphine of the general formula II can be controlled by ³¹P-NMR spectroscopy.

³¹P-NMR spectroscopy is well known to the skilled person and he will easily adapt the determination conditions according to his process equipment.

It is appreciated that the mono(acyl)phosphine of the general formula I and/or the bis(acyl)phosphine of the general formula II is prepared by a specific process, namely a process avoiding the use of metallic sodium or lithium in combination with undesirable phosphorus compounds such as white phosphorus, red phosphorus, phosphorus trichloride, alkyl or aryl phosphine, or dialkyl or diaryl phosphine.

In particular, the process is characterized in that it comprises the steps of
a) contacting a metal phosphide selected from the group consisting of Ca₃P₂, Zn₃P₂, AIP, Fe₃P, Ni₃P₂, Sr₃P₂, Ba₃P₂, Co₃P₂, ScP, Ti₃P₄, Sn₃P₄, WP₂, LaP, Pb₃P₂, BiP, and mixtures thereof or a mixed metal phosphide being an iron cobalt phosphide or a zirconium niobium phosphide, with a chelating agent,
b) contacting the mixture obtained in step a) with a compound of the general formula IIIa and/or IIIb, 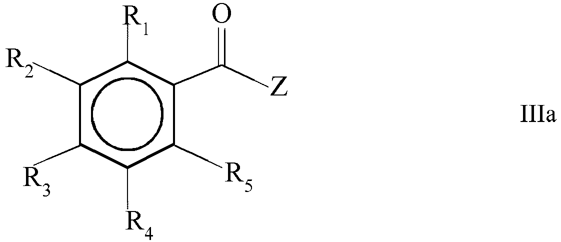 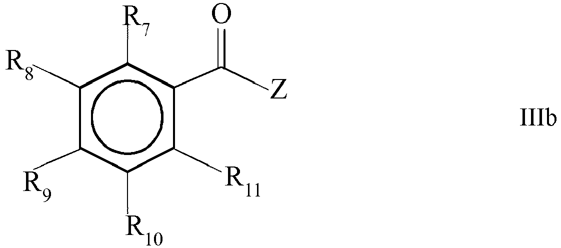 wherein R₁, R₂, R₃, R₄ and R₅ and/or R₇, R₈, R₉, R₁₀ and R₁₁ are as defined above; Z is selected from halogen, C₁-C₂₀-alkylcarboxy, C₆-C₁₂-arylcarboxy, C₁-C₈-alkoxy and C₆-C₁₂-aryloxy; and
c) and acidifying the mixture obtained in step b).

Accordingly, in a first step a metal phosphide is contacted with a chelating agent. It is believed that the metal cations of the metal phosphide are complexated by the chelating agent and thus this step advantageously provides a sufficient amount of phosphide anions in the following process step b).

A suitable metal phosphide is selected from the group comprising Ca₃P₂, Zn₃P₂, AIP, Fe₃P, Ni₃P₂, Sr₃P₂, Ba₃P₂, Co₃P₂, ScP, Ti₃P₄, Sn₃P₄, WP₂, LaP, Pb₃P₂, BiP, and mixtures thereof or a mixed metal phosphide comprising two or more metal cations. Preferably, the metal phosphide is selected from the group comprising Ca₃P₂, Zn₃P₂, AIP, Fe₃P, and mixtures thereof. More preferably, the metal phosphide is selected from the group comprising Ca₃P₂, Zn₃P₂, AIP and mixtures thereof. Even more preferably, the metal phosphide is selected from the group comprising Ca₃P₂, Zn₃P₂, AIP and mixtures thereof. Most preferably, the metal phosphide is selected from the group comprising Ca₃P₂, Zn₃P₂ and mixtures thereof.

It is appreciated that the mixed metal phosphide in step a) is selected from iron cobalt phosphides such as Fe_{0.5}Co_{0.5}P, Fe_{0.25}Co_{0.75}P or Fe_{0.75}Co_{0.25}P and zirconium niobium phosphides such as Zr_{6.45}Nb_{4.55}P₄.

It is appreciated that calcium and zinc cations are especially accessible to be complexated by the chelating agent and thus render the phosphide anions more accessible for the following reaction and result in higher yields of the mono(acyl)phosphine of the general formula I and/or the bis(acyl)phosphine of the general formula II. In one embodiment, the metal phosphide is thus Ca₃P₂. Alternatively, the metal phosphide is thus Zn₃P₂.

In view of the above, it is thus essential for the present process that the metal phosphide is contacted with a chelating agent in order to provide a sufficient amount of the phosphide anions for the following reaction. The chelating agent is not restricted to a specific chelating agent. However, it is preferred that the chelating agent has the capability of complexing Ca²⁺, Zn²⁺, Al⁺, Fe³⁺, Ni³⁺, Sr²⁺, Ba²⁺, Co²⁺, Sc⁺, Ti⁴⁺, Sn⁴⁺, W²⁺, La⁺, Pb³⁺, Bi⁺, and mixtures thereof. Preferably, the chelating agent has the capability of complexing Ca²⁺, Zn²⁺, Al⁺, Fe³⁺ and mixtures thereof, preferably Ca²⁺, Zn²⁺, Al³⁺ and mixtures thereof, and most preferably Ca²⁺, Zn²⁺, Al³⁺ and mixtures thereof. For example, the chelating agent has the capability of complexing Ca²⁺. Alternatively, the chelating agent has the capability of complexing Zn²⁺.

In one embodiment, the chelating agent is selected from the group comprising 1,2-dimethoxyethane (DME), 1,2-diethoxyethane (DEE), 1,2-dihydroxypropane, 1,3-dihydroxypropane, 1,2-dimethoxypropane, 1,3-dimethoxypropane, glycerol, 1,3-dioxane, 1,4-dioxane, tris(2-aminoethyl)amine, tris[2-(dimethylamino)ethyl]amine diethylene glycol dimethyl ether (Diglyme), triethylene glycol dimethyl ether (Triglyme), N,N,N',N'-tetramethylethylendiamine (TMEDA), ethylenediaminetetraacetic acid (EDTA) and mixtures thereof. For example, the chelating agent is selected from the group comprising 1,2-dimethoxyethane (DME), 1,2-diethoxyethane (DEE), glycerol, diethylene glycol dimethyl ether (Diglyme), triethylene glycol dimethyl ether (Triglyme), N,N,N',N'-tetramethylethylendiamine (TMEDA), ethylenediaminetetraacetic acid (EDTA) and mixtures thereof. Preferably, the chelating agent is selected from the group comprising 1,2-dimethoxyethane (DME), 1,2-diethoxyethane (DEE), diethylene glycol dimethyl ether (Diglyme), triethylene glycol dimethyl ether (Triglyme) and mixtures thereof. More preferably, the chelating agent is selected from 1,2-dimethoxyethane (DME), 1,2-diethoxyethane (DEE), diethylene glycol dimethyl ether (Diglyme) and mixtures thereof. Most preferably, the chelating agent is 1,2-dimethoxyethane (DME) and/or 1,2-diethoxyethane (DEE), e.g. 1,2-dimethoxyethane (DME) or 1,2-diethoxyethane (DEE). In one embodiment, the chelating agent is 1,2-dimethoxyethane (DME).

It is preferred that the weight ratio of chelating agent to metal phosphide [chelating agent:metal phosphide] is from 50:1 to 2:1, more preferably from 30:1 to 3:1, even more preferably from 20:1 to 3:1 and most preferably from 10:1 to 3:1.

Step a) of the process of the present invention can be carried out over a wide temperature range. It is appreciated that a lower temperature in step a) results in a slower complexating of the metal cations by the chelating agent but improves the overall provision of phosphide anions. Thus, in order to obtain a sufficient amount of phosphide anions for the following reaction in step b) it is preferred that the process is carried out at a temperature in the range from 10 to 50 °C, preferably in the range from 12 to 40 °C, more preferably in the range from 15 to 30 °C, and most preferably in the range from 15 to 28 °C. For example, step a) is carried out at about room temperature, i.e. a temperature of about 21 °C ± 2 °C.

In one embodiment, process step a) is carried out in the absence of further additives. This is preferably the case if the chelating agent is liquid as such, e.g. 1,2-dimethoxyethane (DME). Alternatively, process step a) is carried out in the presence of one or more additives. For example, an additive selected from the group comprising potassium tert-butoxide, trisodium α-DL-alanine diacetate, trimethylamine, trimethylamine and mixtures thereof, can be added into step a).

Additionally or alternatively, an alcohol can be further added into step a). The addition of an alcohol is advantageous in order to control the protonation of the metal phosphide and thus renders the metal phosphide more accessible (i.e. reactive) for the following reaction in process step b).

If an alcohol is added into step a), the alcohol is preferably selected from the group comprising methanol, ethanol, n-propanol, iso-propanol, n-butanol, iso-butanol, tert-butanol, n-amyl alcohol, sec-amyl alcohol, tert-amyl alcohol, 3-methyl-3-pentanol, ethylenglycol, 1,2,3-propantriol, ethanolamine, diethanolamine, triethanolamine and mixtures thereof. The overall yield is further improved if a sterically hindered alcohol is added. Thus, the alcohol is especially selected from the group comprising tert-butanol, sec-amyl alcohol, tert-amyl alcohol, 3-methyl-3-pentanol and mixtures thereof. Most preferably, the alcohol is tert-butanol, tert-amyl alcohol, 3-methyl-3-pentanol and mixtures thereof. For example, the alcohol is tert-amyl alcohol or 3-methyl-3-pentanol.

If an alcohol is added into step a), the alcohol is preferably added at the end of step a).

Process step a) is preferably carried out under mixing the components, i.e. the metal phosphide, chelating agent and optional additives and alcohol. The skilled person will adapt the mixing conditions (such as the configuration of mixing tools and mixing speed) according to his process equipment.

The following process step b) is carried out in that the mixture obtained in step a) is contacted with a compound of the general formula IIIa and/or IIIb, 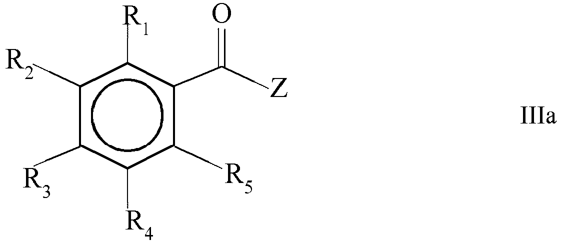 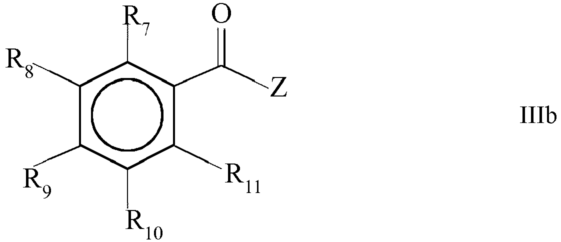 wherein R₁, R₂, R₃, R₄ and R₅ and/or R₇, R₈, R₉, R₁₀ and R₁₁ are as defined above; Z is selected from halogen, C₁-C₂₀-alkylcarboxy, C₆-C₁₂-arylcarboxy, C₁-C₈-alkoxy and C₆-C₁₂-aryloxy.

With regard to the definition of the R₁, R₂, R₃, R₄, R₅, R₇, R₈, R₉, R₁₀ and R₁₁ in general formula IIIa and/or IIIb and preferred embodiments thereof, reference is made to the statements provided above when discussing the technical details of the mono(acyl)phosphine of the general formula I and/or the bis(acyl)phosphine of the general formula II obtained by the process of the present invention.

As regards Z in in general formula IIIa and/or IIIb, it is appreciated that Z is selected from halogen, C₁-C₂₀-alkylcarboxy, C₆-C₁₂-arylcarboxy, C₁-C₈-alkoxy and C₆-C₁₂-aryloxy. Preferably, Z is a halogen. More preferably, Z is selected from fluoro, chloro, bromo and iodo, even more preferably chloro, bromo and iodo, still more preferably chloro and bromo. Most preferably, Z is chloro.

The term "C₁-C₂₀-alkylcarboxy" in the meaning of the present invention means that the carboxy moiety has a linear or branched chain alkyl having 1 to 20 carbon atoms, and includes, for example, methylcarboxy, ethylcarboxy, propylcarboxy, isopropylcarboxy, n-butylcarboxy, isobutylcarboxy, sec. butylcarboxy, tert. butylcarboxy, n-pentylcarboxy, isopentylcarboxy, neopentylcarboxy, hexylcarboxy, heptylcarboxy, octylcarboxy, 2-ethylhexylcarboxy, 1,1,3,3-tetramethylbutylcarboxy, n-heptylcarboxy, 2,4,4-trimethylpentylcarboxy, 2-ethylhexylcarboxy, octylcarboxy, nonylcarboxy, decylcarboxy, undecylcarboxy, dodecylcarboxy, tetradecylcarboxy, pentadecylcarboxy, hexadecylcarboxy, heptadecylcarboxy, octadecylcarboxy, nonadecylcarboxy and eicosylcarboxy. Accordingly, Z forms together with the carbonyl group of the compound of the general formula IIIa and/or IIIb an anhydride group.

The term "C₆-C₁₂-arylcarboxy" in the meaning of the present invention means that the carboxy moiety has a C₆-C₁₂-aryl, and includes, for example, phenylcarboxy, naphthylcarboxy, methylphenylcarboxy, dimethoxyphenylcarboxy, 5-isopropyl-2-methylphenylcarboxy, methylphenylcarboxy and t-butylphenylcarboxy, preferably naphthylcarboxy. Accordingly, Z forms together with the carbonyl group of the compound of the general formula IIIa and/or IIIb an anhydride group.

The term "C₁-C₈-alkoxy" in the meaning of the present invention means that the alkoxy moiety has a linear or branched chain alkyl having 1 to 8 carbon atoms, and includes, for example, methoxy, ethoxy, propoxy, isopropoxy, butoxy, isobutoxy, tertiary butoxy, pentyloxy, hexyloxy, heptyloxy and octyloxy. Accordingly, Z forms together with the carbonyl group of the compound of the general formula IIIa and/or IIIb an ester group.

The term "C₆-C₁₂-aryloxy" in the meaning of the present invention means that the aryloxy moiety has a C₆-C₁₂-aryl. Accordingly, Z forms together with the carbonyl group of the compound of the general formula IIIa and/or IIIb an ester group.

Thus, in one embodiment the compound of the general formula IIIa is a compound wherein R₁, R₂, R₃, R₄ and R₅ are the same or different and are independently selected from H, halogen, linear or branched C₁-C₂₀-alkyl, linear or branched C₂-C₈-alkenyl, C₁-Cs-alkoxy, C₂-C₈-alkenyloxy, C₃-C₈-cycloalkyl and C₆-C₁₂-aryl and Z is chloro. Preferably, R₁, R₂, R₃, R₄ and R₅ are the same or different and are independently selected from H, halogen and, linear or branched C₁-C₂₀-alkyl and Z is chloro. Most preferably, R₁, R₂, R₃, R₄ and R₅ are the same or different and are independently selected from H and linear or branched C₁-C₂₀-alkyl and Z is chloro.

Thus, it is preferred that one or more of R₁, R₂, R₃, R₄ and R₅ is/are H and Z is chloro.

Additionally or alternatively, it is preferred that one or more of R₁, R₂, R₃, R₄ and R₅ is/are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl and Z is chloro. For example, one or more of R₁, R₂, R₃, R₄ and R₅ is/are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl, and Z is chloro. It is especially preferred that one or more of R₁, R₂, R₃, R₄ and R₅ is/are C₁- or C₂-alkyl, e.g. C₁-alkyl, and Z is chloro.

Preferably, R₁, R₃ and R₅ are the same and Z is chloro. In this embodiment, R₁, R₃ and R₅ are preferably selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring, and Z is chloro. Preferably, R₁, R₃ and R₅ are selected from H, halogen, linear or branched C₁-C₂₀-alkyl, linear or branched C₂-C₈-alkenyl, C₁-Cs-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring, and Z is chloro. For example, R₁, R₃ and R₅ are the same and are selected from linear or branched C₁-C₂₀-alkyl, linear or branched C₂-C₈-alkenyl, C₁-C₈-alkoxy, C₂-C₈-alkenyloxy, C₃-C₈-cycloalkyl and an O-, S- or N-containing 5- or 6-membered heterocyclic ring, and Z is chloro.

In one embodiment, R₁, R₃ and R₅ are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl, and Z is chloro. For example, R₁, R₃ and R₅ are the same and are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl, and Z is chloro. It is especially preferred that R₁, R₃ and R₅ are the same and are C₁- or C₂-alkyl, e.g. C₁-alkyl, and Z is chloro.

In one embodiment, R₂ and R₄ are the same and Z is chloro. In this embodiment, R₂ and R₄ are preferably selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring, and Z is chloro. Preferably, R₂ and R₄ are selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring, and Z is chloro. For example, R₂ and R₄ are the same and are selected from H, linear or branched C₁-C₂₀-alkyl, linear or branched C₂-Cs-alkenyl, C₁-C₈-alkoxy, C₂-C₈-alkenyloxy, C₃-C₈-cycloalkyl and an O-, S- or N-containing 5- or 6-membered heterocyclic ring, and Z is chloro.

In one embodiment, R₂ and R₄ are the same and are H, and Z is chloro.

It is appreciated that R₂ and R₄ are preferably different from R₁, R₃ and R₅. Thus, if R₂ and R₄ are different from R₁, R₃, and R₅, R₂ and R₄ are preferably the same and are H and R₁, R₃ and R₅ are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl, and Z is chloro. For example, R₂ and R₄ are the same and are H and R₁, R₃ and R₅ are the same and are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl, and Z is chloro. It is especially preferred that R₂ and R₄ are the same and are H and R₁, R₃ and R₅ are the same and are C₁- or C₂-alkyl, e.g. C₁-alkyl, and Z is chloro.

As regards R₇, R₈, R₉, R₁₀ and R₁₁ in the general formula IIIb, it is to be noted that they can be the same or different. Preferably, R₇, R₈, R₉, R₁₀ and R₁₁ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring, and Z is chloro.

In one embodiment, R₇, R₈, R₉, R₁₀ and R₁₁ in the general formula IIIb are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl and C₆-C₁₂-aryl, and Z is chloro. Preferably, R₇, R₈, R₉, R₁₀ and R₁₁ are the same or different and are independently selected from H, halogen and, linear or branched C₁-C₂₀-alkyl, and Z is chloro. Most preferably, R₇, R₈, R₉, R₁₀ and R₁₁ are the same or different and are independently selected from H and, linear or branched C₁-C₂₀-alkyl, and Z is chloro.

Thus, it is preferred that one or more of R₇, R₈, R₉, R₁₀ and R₁₁ is/are H and Z is chloro.

Additionally or alternatively, it is preferred that one or more of R₇, R₈, R₉, R₁₀ and R₁₁ is/are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl, and Z is chloro. For example, one or more of R₇, R₈, R₉, R₁₀ and R₁₁ is/are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl, and Z is chloro. It is especially preferred that one or more of R₇, R₈, R₉, R₁₀ and R₁₁ is/are C₁- or C₂-alkyl, e.g. C₁-alkyl, and Z is chloro.

Preferably, R₇, R₉ and R₁₁ are the same and Z is chloro. In this embodiment, R₇, R₉ and R₁₁ are preferably selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring, and Z is chloro. Preferably, R₇, R₉ and R₁₁ are selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring, and Z is chloro. For example, R₇, R₉ and R₁₁ are the same and are selected from linear or branched C₁-C₂₀-alkyl, linear or branched C₂-C₈-alkenyl, C₁-C₈-alkoxy, C₂-C₈-alkenyloxy, C₃-C₈-cycloalkyl and an O-, S- or N-containing 5- or 6-membered heterocyclic ring, and Z is chloro.

In one embodiment, R₇, R₉ and R₁₁ are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl, and Z is chloro. For example, R₇, R₉ and R₁₁ are the same and are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl, and Z is chloro. It is especially preferred that R₇, R₉ and R₁₁ are the same and are C₁- or C₂-alkyl, e.g. C₁-alkyl, and Z is chloro.

In one embodiment, R₈ and R₁₀ are the same and Z is chloro. In this embodiment, R₈ and R₁₀ are preferably selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring, and Z is chloro. Preferably, R₈ and R₁₀ are selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy and an O-, S- or N-containing 5- or 6-membered heterocyclic ring, and Z is chloro. For example, R₈ and R₁₀ are the same and are selected from H, linear or branched C₁-C₂₀-alkyl, linear or branched C₂-C₈-alkenyl, C₁-C₈-alkoxy, C₂-C₈-alkenyloxy, C₃-C₈-cycloalkyl and an O-, S- or N-containing 5- or 6-membered heterocyclic ring, and Z is chloro.

In one embodiment, R₈ and R₁₀ are the same and are H and Z is chloro.

It is appreciated that R₈ and R₁₀ are preferably different from R₇, R₉ and R₁₁. Thus, if R₈ and R₁₀ are different from R₇, R₉ and R₁₁, R₈ and R₁₀ are preferably the same and are H and R₇, R₉ and R₁₁ are the same and are linear or branched C₁-C₂₀-alkyl, preferably linear or branched C₁-C₁₈-alkyl, more preferably linear or branched C₁-C₁₂-alkyl and most preferably linear C₁-C₈-alkyl, e.g. linear C₁-C₈-alkyl, and Z is chloro. For example, R₈ and R₁₀ are the same and are H and R₇, Rg and R₁₁ are the same and are linear or branched C₁-C₆-alkyl, e.g. linear C₁-C₆-alkyl, preferably linear or branched C₁-C₄-alkyl, e.g. linear C₁-C₄-alkyl, and most preferably linear or branched C₁-C₃-alkyl, e.g. linear C₁-C₃-alkyl, and Z is chloro. It is especially preferred that R₈ and R₁₀ are the same and are H and R₇, R₉ and R₁₁ are the same and are C₁- or C₂-alkyl, e.g. C₁-alkyl, and Z is chloro.

In one embodiment, the mixture obtained in step a) is contacted with a compound of the general formula IIIa, wherein R₁, R₃ and R₅ are the same and R₂ and R₄ are the same and Z is chloro. Preferably, R₁, R₃ and R₅ in general formula IIIa are the same and are C₁-alkyl and R₂ and R₄ are the same and are H and Z is chloro. It is appreciated that this embodiment specifically results in a mono(acyl)phosphine of the general formula I and/or the corresponding symmetric bis(acyl)phosphine of the general formula II, i.e. R₁, R₃, R₅, R₇, R₉ and R₁₁ are the same and R₂, R₄, R₈ and R₁₀ are the same.

Alternatively, the mixture obtained in step a) is contacted with a compound of the general formula IIIa and IIIB, in which R₁, R₃ and R₅ in general formula IIIa are the same, R₇, R₉ and R₁₁ in general formula IIIb are the same, R₂ and R₄ in general formula IIIa are the same and R₈ and R₁₀ in general formula IIIb are the same and Z is chloro. In this embodiment, R₁, R₃ and R₅ in general formula IIIa are different from R₇, R₉ and R₁₁ in general formula IIIb and R₂ and R₄ in general formula IIIa are different from R₈ and R₁₀ in general formula IIIb and Z is chloro. It is thus appreciated that a mixed bis(acyl)phosphine is obtained if compounds of the general formula IIIa and IIIB are added in step b) of the present process.

It is preferred that the equivalent weight ratio of the compound of the general formula IIIa and/or IIIB to the metal phosphide added in step a) [IIIa and/or IIIb:metal phosphide] is from 15:1 to 1:1, more preferably from 12:1 to 2:1, even more preferably from 10:1 to 2:1 and most preferably from 8:1 to 2:1.

Step b) of the process of the present invention can be carried out over a wide temperature range. Thus, process step b) is preferably carried out at a temperature in the range from -5 to 50 °C, preferably in the range from 0 to 40 °C, more preferably in the range from 0 to 30 °C, and most preferably in the range from 0 to 28 °C.

It is appreciated that the yield of the mono(acyl)phosphine of the general formula I and/or the bis(acyl)phosphine of the general formula II obtained by the process can be increased if the temperature in process step b) is below or in the same range (± 5 °C) as the temperature used in process step a). Thus, it is preferred that step b) is carried out at about room temperature, i.e. a temperature of about 21 °C ± 2 °C.

In one embodiment, process steps a) and b) are carried out at about room temperature, i.e. a temperature of about 21 °C ± 2 °C.

Alternatively, process step b) is carried out at a temperature below the temperature used in process step a).

In one embodiment, process step b) is carried out without the addition of further additives. Alternatively, one or more additives can be added to process step b). For example, an additive selected from the group comprising potassium tert-butoxide, trisodium α-DL-alanine diacetate, trimethylamine, triethylamine and mixtures thereof, can be added into step b).

Additionally or alternatively, an alcohol can be added into step b). The alcohol is preferably selected from the group comprising methanol, ethanol, n-propanol, iso-propanol, n-butanol, iso-butanol, tert-butanol, n-amyl alcohol, sec-amyl alcohol, tert-amyl alcohol, 3-methyl-3-pentanol, ethylenglycol, 1,2,3-propantriol, ethanolamine, diethanolamine, triethanolamine and mixtures thereof. The overall yield is further improved if a sterically hindered alcohol is added. Thus, the alcohol is especially selected from the group comprising tert-butanol, sec-amyl alcohol, tert-amyl alcohol, 3-methyl-3-pentanol and mixtures thereof. Most preferably, the alcohol is tert-butanol, tert-amyl alcohol, 3-methyl-3-pentanol and mixtures thereof. For example, the alcohol is tert-amyl alcohol or 3-methyl-3-pentanol.

If an alcohol is added in process step b), the alcohol is preferably added to the mixture of step a) before the compound of the general formula IIIa and/or IIIB is added.

Process step b) is preferably carried out under mixing the components, i.e. the mixture obtained in step a), the compound of the general formula IIIa and/or IIIB and optional additives and alcohol. The skilled person will adapt the mixing conditions (such as the configuration of mixing tools and mixing speed) according to his process equipment. Subsequently to step b), the mixture obtained in step b) is acidified in step c). Preferably, step c) is carried out by adding an acid. It is preferred that the acid has a pKa value of below 6, more preferably in the range from 0 to 5, and most preferably in the range from 2 to 5.

In one embodiment, the acid is preferably selected from the group comprising hydrochloric acid, acetic acid, propionic acid, butanoic acid, oxalic acid, fumaric acid, benzoic acid, phosphoric acid, sulfuric acid, citric acid and mixtures thereof.

It is appreciated that the acid is not restricted to a specific acid, but it is preferred to add a weak acid in order to avoid the unwanted formation of by-products. Thus, the acid is preferably selected from acetic acid, propionic acid, butanoic acid, oxalic acid, fumaric acid, benzoic acid and citric acid, more preferably is acetic acid.

It is preferred that the equivalent weight ratio of the compound of the general formula IIIa and/or IIIB to the acid added in step c) [IIIa and/or IIIb:acid] is from 15:1 to 1:1, more preferably from 12:1 to 2:1, even more preferably from 10:1 to 2:1 and most preferably from 8:1 to 2:1.

Step c) of the process of the present invention can be carried out over a wide temperature range. Thus, process step b) is preferably carried out at a temperature in the range from -5 to 50 °C, preferably in the range from 0 to 40 °C, more preferably in the range from 0 to 30 °C, and most preferably in the range from 0 to 28 °C. However, it is preferred that step c) is carried out at about room temperature, i.e. a temperature of about 21 °C ± 2 °C.

Subsequent to process step c) of acidifying the mixture obtained in step b), the process may comprise further steps for isolating and/or purifying the obtained mono(acyl)phosphine of the general formula I and/or the bis(acyl)phosphine of the general formula II.

For example, the process may further comprise a step of
i) separating the obtained mono(acyl)phosphine of the general formula I and/or the bis(acyl)phosphine of the general formula II from the chelating agent, and/or
ii) taking up the obtained mono(acyl)phosphine of the general formula I and/or the bis(acyl)phosphine of the general formula II in organic solvent and filtering the obtained mixture.

In one embodiment, the process further comprises the steps of
i) separating the obtained mono(acyl)phosphine of the general formula I and/or the bis(acyl)phosphine of the general formula II from the chelating agent, and/or
ii) taking up the obtained mono(acyl)phosphine of the general formula I and/or the bis(acyl)phosphine of the general formula II in organic solvent and filtering the obtained mixture.

Additionally, the process may further comprise a step of drying the obtained mono(acyl)phosphine of the general formula I and/or the bis(acyl)phosphine of the general formula II.

Such steps are well known in the art and will be adapted by the skilled person according to the process conditions and equipment used for carrying out the process of the present invention.

In one embodiment, the process comprises a further step d) of alkylating, alkoxylating, alkenylating, alkenoxylating, arylating, acylating, carboxylating, cycloalkylating, cycloalkoxylating, arylalkoxylating, alkenylarylalkoxylating or hydroxylating and oxidizing the bis(acyl)phosphine of the general formula II obtained in step c) for obtaining the bis(acyl)phosphine of the general formula IV 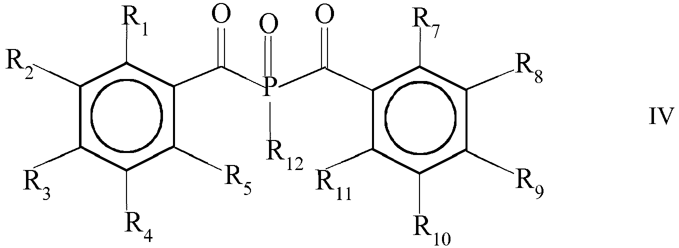 wherein R₁, R₂, R₃, R₄, R₅, R₇, R₈, R₉, R₁₀ and R₁₁ are as defined above, and R₁₂ is selected from the group comprising OH, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₁-C₈-acyl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl and an O-, S- or N-containing 5- or 6-membered heterocyclic ring.

With regard to the definition of the R₁, R₂, R₃, R₄, R₅, R₇, R₈, R₉, R₁₀ and R₁₁ in general formula IV and preferred embodiments thereof, reference is made to the statements provided above when discussing the technical details of the mono(acyl)phosphine of the general formula I and/or the bis(acyl)phosphine of the general formula II obtained by the process of the present invention.

As regards R₁₂ in general formula IV, it is selected from the group comprising OH, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₁-C₈-acyl, C₃-C₈-cycloalkoxy, C₇-C₁₂-arylalkoxy, C₉-C₁₅-alkenylarylalkoxy and an O-, S- or N-containing 5- or 6-membered heterocyclic ring. Preferably, R₁₂ is selected from the group comprising OH, linear or branched C₁-C₂₀-alkyl, C₃-C₈-cycloalkyl, C₆-C₁₂-aryl, C₁-C₈-acyl,and an O-, S- or N-containing 5- or 6-membered heterocyclic ring. More preferably, R₁₂ is selected from the group comprising OH, linear or branched C₁-C₂₀-alkyl and C₆-C₁₂-aryl. Most preferably, R₁₂ is OH or linear or branched C₁-C₂₀-alkyl. For example, R₁₂ is OH.

The oxidizing is preferably carried out by using hydrogen peroxide.

Reactions resulting in the alkylating, alkoxylating, alkenylating, alkenoxylating, arylating, acylating, carboxylating, cycloalkylating, cycloalkoxylating, arylalkoxylating, alkenylarylalkoxylating or hydroxylating and oxidizing of a bis(acyl)phosphine of the general formula II are well known in the art and can be adapted by the skilled person according to the specific reaction and equipment used for carrying out the process of the present invention.

Alternatively, the process can comprise a further step d) of alkylating, alkoxylating, alkenylating, alkenoxylating, arylating, acylating, carboxylating, cycloalkylating, cycloalkoxylating, arylalkoxylating, alkenylarylalkoxylating or hydroxylating the mono(acyl)phosphine of the general formula I obtained in step c) for obtaining the mono(acyl)phosphine of the general formula V 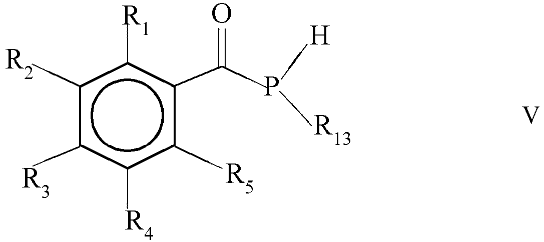 wherein R₁, R₂, R₃, R₄ and R₅ are as defined above, and R₁₃ is selected from the group comprising OH, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₁-C₈-acyl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl and an O-,S- or N-containing 5- or 6-membered heterocyclic ring.

With regard to the definition of the R₁, R₂, R₃, R₄ and R₅ in general formula V and preferred embodiments thereof, reference is made to the statements provided above when discussing the technical details of the mono(acyl)phosphine of the general formula I and/or the bis(acyl)phosphine of the general formula II obtained by the process of the present invention.

As regards R₁₃ in general formula V, it is selected from the group comprising OH, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₁-C₈-acyl, C₃-C₈-cycloalkoxy, C₇-C₁₂-arylalkoxy, C₉-C₁₅-alkenylarylalkoxy and an O-,S- or N-containing 5- or 6-membered heterocyclic ring. Preferably, R₁₃ is selected from the group comprising OH, linear or branched C₁-C₂₀-alkyl, C₃-C₈-cycloalkyl, C₆-C₁₂-aryl, C₁-C₈-acyl, and an O-,S- or N-containing 5- or 6-membered heterocyclic ring. More preferably, R₁₃ is selected from the group comprising OH, linear or branched C₁-C₂₀-alkyl and C₆-C₁₂-aryl.

Reactions resulting in the alkylating, alkoxylating, alkenylating, alkenoxylating, arylating, acylating, carboxylating, cycloalkylating, cycloalkoxylating, arylalkoxylating, alkenylarylalkoxylating or hydroxylating of a mono(acyl)phosphine of the general formula I are well known in the art and can be adapted by the skilled person according to the specific reaction and equipment used for carrying out the process of the present invention.

The scope and interest of the invention will be better understood based on the following examples which are intended to illustrate certain embodiments of the invention and are non-limitative.

### EXAMPLES

### Example 1:

### Synthetic Procedure

A 100 mL flask was flushed with argon and charged with calcium phosphide (8%, 3.1g, 1.36 mmol, 1 eq.). Dry 1,2-dimethoxyethane (DME) (20 mL) was added to the flask. After stirring the reaction mixture for 15 minutes, 2,4,6-trimethylbenzoyl chloride (1.0 g, 0.909 mL, 5.55 mmol, 4 eq.) was added slowly over a period of 10 minutes at ambient temperature (21°C). Subsequently, the mixture was stirred for another 17 hours at ambient temperature. A color change from red-brown to greenish yellow was observed, along with an increase of the viscosity of the mixture. This protocol yields the calcium salt Ca[P(COMes)₂]₂ as the product. This was further treated at room temperature (22°C) with acetic acid (1.12 g, 19 mmol, 13.7 eq.) which was added dropwise within 10 minutes. The reaction mixture was stirred for another 22 hours at ambient temperature to yield HP(COMes)₂ (BAP-H).

The solvent DME was removed *in vacuo* and a yellow solid residue was obtained. The yellow solid was dissolved in dry toluene (75 mL) and filtered over celite in order to remove CaCl₂ and Ca(OAc)₂. The filter cake was washed twice with dry toluene (2 x 5 mL). After filtration, toluene was removed *in vacuo* at room temperature (24 °C) for 6 hours and gave 5.4 g of crude BAP-H (3.5% purity based on NMR spectroscopy which corresponds to a yield of 21.3%.

The ³¹P{1H} NMR spectrum shows two signals at δ = 81 and 6 ppm indicating an equilibrium of the protonated phosphine (δ = 6 ppm) and its enol from P-acyl-2-hydroxy-phosphaalkene (δ = 81 ppm) as shown in the following scheme 1:

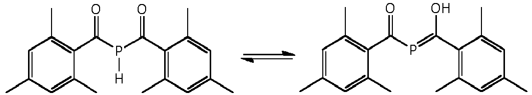

Formula: C₂₀H₂₃O₂P

Molar mass: 326.37 g/mol
³¹P NMR (121.5 MHz, C₆D₆) δ [ppm] = 81 (s), 6 (s).
¹H NMR (400.13 MHz, C₆D₆) δ [ppm] = 2.00 (s, 6H, Mes p-C*H₃*) 2.33 (s, 12H, Mes o-C*H₃*), 6.55 (s, 4H, Mes m-*H*).

## Claims

1. A process for the preparation of a mono(acyl)phosphine of the general formula I and/or a bis(acyl)phosphine of the general formula II, 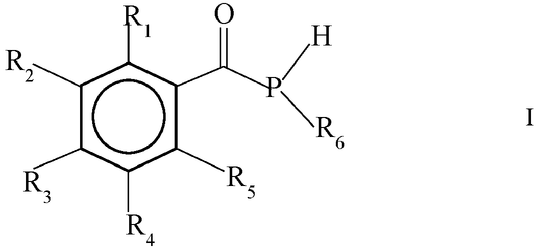
wherein R₁, R₂, R₃, R₄ and R₅ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S-or N-containing 5- or 6-membered heterocyclic ring;
R₆ is H or R₆ is replaced by an alkaline earth metal cation or a mixed alkali metal/alkaline earth metal cation; 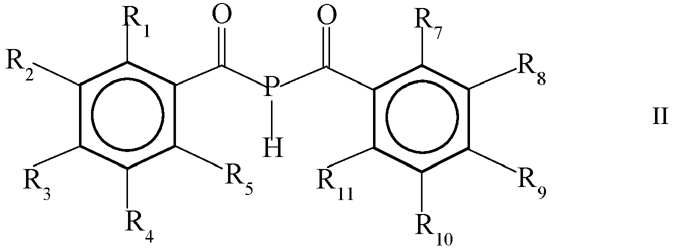 wherein R₁, R₂, R₃, R₄, R₅, R₇, R₈, R₉, R₁₀ and R₁₁ are the same or different and are independently selected from H, halogen, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl, SR₁₄, NHR₁₄ or NR₁₄R₁₅ with R₁₄ and R₁₅ being independently selected from H, linear or branched C₁-C₂₀-alkyl, linear or branched C₂-C₈-alkenyl and C₃-C₈-cycloalkyl, and an O-, S- or N-containing 5- or 6-membered heterocyclic ring; the process comprising the steps of
a) contacting a metal phosphide selected from the group consisting of Ca₃P₂, Zn₃P₂, AIP, Fe₃P, Ni₃P₂, Sr₃P₂, Ba₃P₂, Co₃P₂, ScP, Ti₃P₄, Sn₃P₄, WP₂, LaP, Pb₃P₂, BiP, and mixtures thereof or a mixed metal phosphide being an iron cobalt phosphide or a zirconium niobium phosphide, with a chelating agent,
b) contacting the mixture obtained in step a) with a compound of the general formula IIIa and/or IIIb, 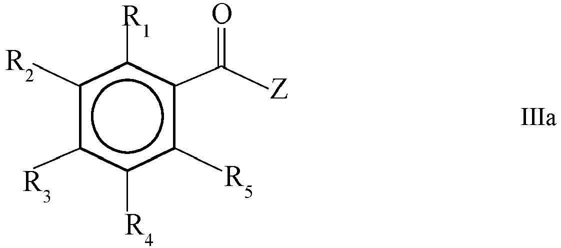 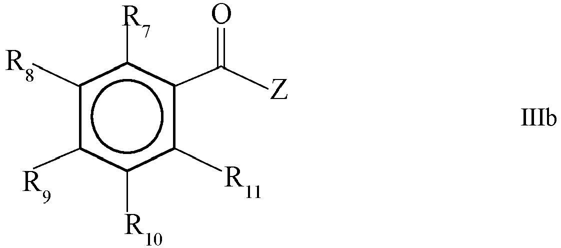 wherein R₁, R₂, R₃, R₄ and R₅ and/or R₇, R₈, R₉, R₁₀ and R₁₁ are as defined above; Z is selected from halogen, C₁-C₂₀-alkylcarboxy, C₆-C₁₂-arylcarboxy, C₁-C₈-alkoxy and C₆-C₁₂-aryloxy; and
c) and acidifying the mixture obtained in step b).

2. The process according to claim 1, **characterized in that** R₁, R₃ and R₅ and/or R₇, R₉ and R₁₁ are the same.

3. The process according to claim 2, **characterized in that** R₁, R₃ and R₅ and/or R₇, R₉ and R₁₁ are the same and are selected from linear or branched C₁-C₂₀-alkyl, preferably linear or branched C₁-C₁₈-alkyl, more preferably linear or branched C₁-C₁₂-alkyl and most preferably linear C₁-C₈-alkyl.

4. The process according to any one of claims 1 to 3, **characterized in that** R₂ and R₄ and/or R₈ and R₁₀ are the same, preferably R₂ and R₄ and/or R₈ and R₁₀ are different from R₁, R₃ and R₅ and/or R₇, R₉ and R₁₁.

5. The process according to claim 1, **characterized in that** R₂ and R₄ and/or R₈ and R₁₀ are the same and are H.

6. The process according to any one of claims 1 to 5, **characterized in that** Z is a halogen, preferably selected from fluoro, chloro, bromo and iodo, preferably chloro.

7. The process according to any one of claims 1 to 6, **characterized in that** the metal phosphide is selected from the group consisting of Ca₃P₂, Zn₃P₂, AIP, Fe₃P, and mixtures thereof, preferably from the group consisting of Ca₃P₂, Zn₃P₂, AIP and mixtures thereof.

8. The process according to any one of claims 1 to 7, **characterized in that** the chelating agent has the capability of complexing cations such as Ca²⁺, Zn²⁺, Al⁺, Fe³⁺ and mixtures thereof.

9. The process according to any one of claims 1 to 8, **characterized in that** the chelating agent is selected from the group comprising 1,2-dimethoxyethane (DME), 1,2-diethoxyethane (DEE), 1,2-dihydroxypropane, 1,3-dihydroxypropane, 1,2-dimethoxypropane, 1,3-dimethoxypropane, glycerol, 1,3-dioxane, 1,4-dioxane, tris(2-aminoethyl)amine, tris[2-(dimethylamino)ethyl]amine, diethylene glycol dimethyl ether (Diglyme), triethylene glycol dimethyl ether (Triglyme), N,N,N',N'-tetramethylethylendiamine (TMEDA), ethylenediaminetetraacetic acid (EDTA) and mixtures thereof.

10. The process according to any one of claims 1 to 9, **characterized in that** an alcohol is further added into step a), preferably an alcohol selected from the group comprising methanol, ethanol, n-propanol, iso-propanol, n-butanol, iso-butanol, tert-butanol, n-amyl alcohol, sec-amyl alcohol, tert-amyl alcohol, 3-methyl-3-pentanol, ethylenglycol, 1,2,3-propantriol, ethanolamine, diethanolamine, triethanolamine and mixtures thereof, more preferably the alcohol is selected from the group comprising tert-butanol, sec-amyl alcohol, tert-amyl alcohol, 3-methyl-3-pentanol and mixtures thereof.

11. The process according to any one of claims 1 to 10, **characterized in that** an additive selected from the group comprising potassium tert-butoxide, trisodium α-DL-alanine diacetate, trimethylamine, triethylamine and mixtures thereof, is further added into step a) and/or b).

12. The process according to any one of claims 1 to 11, **characterized in that** step a) is carried out at a temperature in the range from 10 to 50 °C, preferably in the range from 12 to 40 °C, more preferably in the range from 15 to 30 °C, and most preferably in the range from 15 to 28 °C and/or step b) is carried out at a temperature in the range from -5 to 50 °C, preferably in the range from 0 to 40 °C, more preferably in the range from 0 to 30 °C, and most preferably in the range from 0 to 28 °C.

13. The process according to any one of claims 1 to 12, **characterized in that** the process comprises a further step d) of alkylating, alkoxylating, alkenylating, alkenoxylating, arylating, acylating, carboxylating, cycloalkylating, cycloalkoxylating, arylalkoxylating, alkenylarylalkoxylating or hydroxylating and subsequently oxidizing the bis(acyl)phosphine of the general formula II obtained in step c) for obtaining the bis(acyl)phosphine of the general formula IV 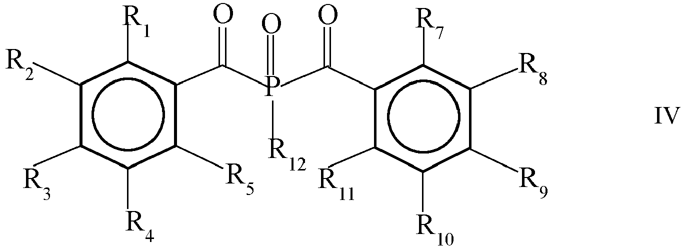 wherein R₁, R₂, R₃, R₄, R₅, R₇, R₈, R₉, R₁₀ and R₁₁ are as defined above, and R₁₂ is selected from the group comprising OH, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₁-C₈-acyl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl and an O-, S- or N-containing 5- or 6-membered heterocyclic ring.

14. The process according to claim 13, **characterized in that** the oxidizing is carried out by using hydrogen peroxide.

15. The process according to any one of claims 1 to 12, **characterized in that** the process comprises a further step d) of alkylating, alkoxylating, alkenylating, alkenoxylating, arylating, acylating, carboxylating, cycloalkylating, cycloalkoxylating, arylalkoxylating, alkenylarylalkoxylating or hydroxylating the mono(acyl)phosphine of the general formula I obtained in step c) for obtaining the mono(acyl)phosphine of the general formula V 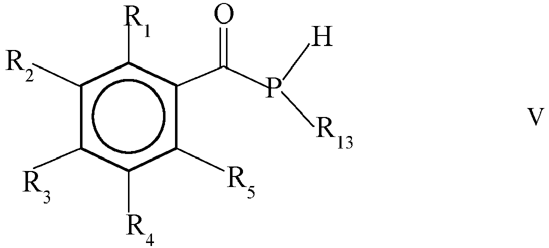 wherein R₁, R₂, R₃, R₄ and R₅ are as defined above, and R₁₃ is selected from the group comprising OH, linear or branched C₁-C₂₀-alkyl, linear or branched C₂-C₈-alkenyl, C₁-C₈-alkoxy, C₂-C₈-alkenyloxy, C₃-C₈-cycloalkyl, C₆-C₁₂-aryl, C₁-C₈-acyl, C₃-C₈-cycloalkoxy, C₇-C₁₂-arylalkoxy, C₉-C₁₅-alkenylarylalkoxy, nitro-, C₆-C₁₂-arylsulfonyl, 4-alkylarylsulfonyl, C₁-C₂₀-alkylcarboxy, C₁-C₈-alkoxycarbonyl and an O-, S- or N-containing 5- or 6-membered heterocyclic ring.

## Patentansprüche

1. Verfahren zur Herstellung eines Mono(acyl)phosphins der allgemeinen Formel I und/oder eines Bis(acyl)phosphins der allgemeinen Formel II, 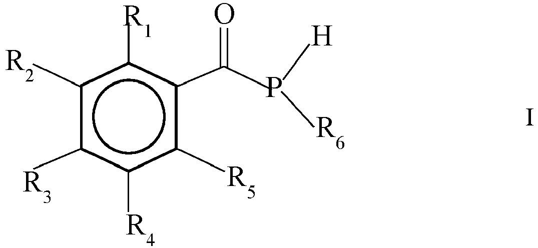
wobei R₁, R₂, R₃, R₄ und R₅ gleich oder verschieden sind und unabhängig voneinander ausgewählt sind aus H, Halogen, linearem oder verzweigtem C₁-C₂₀-Alkyl, linearem oder verzweigtem C₂-C₈-Alkenyl, C₁-C₈-Alkoxy, C₂-C₈-Alkenyloxy, C₃-C₈-Cycloalkyl, C₆-C₁₂-Aryl, C₃-C₈-Cycloalkoxy, C₇-C₁₂-Arylalkoxy, C₉-C₁₅-Alkenylarylalkoxy, Nitro-, C₆-C₁₂-Arylsulfonyl, 4-Alkylarylsulfonyl, C₁-C₂₀-Alkylcarboxy, C₁-C₈-Alkoxycarbonyl, SR₁₄, NHR₁₄ oder NR₁₄R₁₅, wobei R₁₄ und R₁₅ unabhängig voneinander ausgewählt sind aus H, linearem oder verzweigtem C₁-C₂₀-Alkyl, linearem oder verzweigtem C₂-C₈-Alkenyl und C₃-C₈-Cycloalkyl, und einem O-, S- oder N-haltigen 5- oder 6-gliedrigen heterocyclischen Ring;
R₆ H ist oder R₆ durch ein Erdalkalimetallkation oder ein gemischtes Alkalimetall-/Erdalkalimetallkation ersetzt wird; 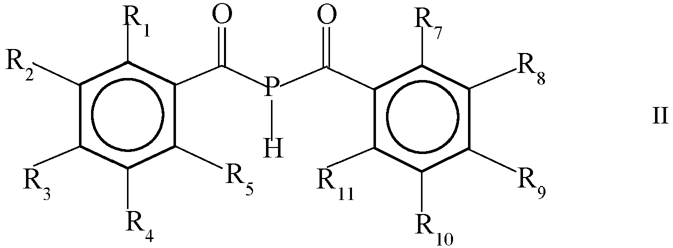 wobei R₁, R₂, R₃, R₄, R₅, R₇, R₈, R₉, R₁₀ und R₁₁ gleich oder verschieden sind und unabhängig voneinander ausgewählt sind aus H, Halogen, linearem oder verzweigtem C₁-C₂₀-Alkyl, linearem oder verzweigtem C₂-C₈-Alkenyl, C₁-C₈-Alkoxy, C₂-C₈-Alkenyloxy, C₃-C₈-Cycloalkyl, C₆-C₁₂-Aryl, C₃-C₈-Cycloalkoxy, C₇-C₁₂-Arylalkoxy, C₉-C₁₅-Alkenylarylalkoxy, Nitro-, C₆-C₁₂-Arylsulfonyl, 4-Alkylarylsulfonyl, C₁-C₂₀-Alkylcarboxy, C₁-C₈-Alkoxycarbonyl, SR₁₄, NHR₁₄ oder NR₁₄R₁₅, wobei R₁₄ und R₁₅ unabhängig voneinander ausgewählt sind aus H, linearem oder verzweigtem C₁-C₂₀-Alkyl, linearem oder verzweigtem C₂-C₈-Alkenyl und C₃-C₈-Cycloalkyl, und einem O-, S- oder N-haltigen 5- oder 6-gliedrigen heterocyclischen Ring;
wobei das Verfahren die Schritte umfasst
a) Kontaktieren eines Metallphosphids, ausgewählt aus der Gruppe, bestehend aus Ca₃P₂, Zn₃P₂, AIP, Fe₃P, Ni₃P₂, Sr₃P₂, Ba₃P₂, Co₃P₂, ScP, Ti₃P₄, Sn₃P₄, WP₂, LaP, Pb₃P₂, BiP und Gemischen davon oder einem gemischten Metallphosphid, das ein Eisenkobaltphosphid oder ein Zirkoniumniobiumphosphid ist, mit einem Chelatbildner,
b) Inkontaktbringen des in Schritt a) erhaltenen Gemisches mit einer Verbindung der allgemeinen Formel IIIa und/oder IIIb, 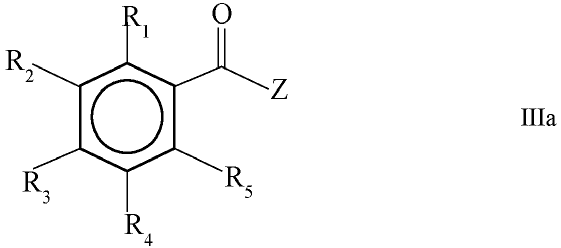 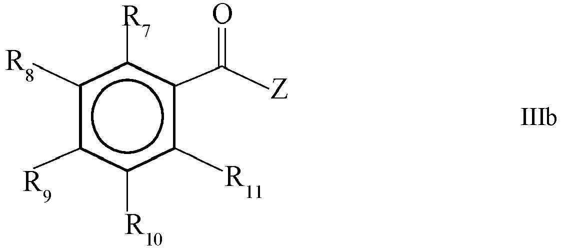 wobei R₁, R₂, R₃, R₄ und R₅ und/oder R₇, R₈, R₉, R₁₀ und R₁₁ wie vorstehend definiert sind; Z ausgewählt ist aus Halogen, C₁-C₂₀-Alkylcarboxy, C₆-C₁₂-Arylcarboxy, C₁-C₈-Alkoxy und C₆-C₁₂-Aryloxy; und
c) Ansäuern des in Schritt b) erhaltenen Gemisches.

2. Verfahren gemäß Anspruch 1, **dadurch gekennzeichnet, dass** R₁, R₃ und R₅ und/oder R₇, R₉ und R₁₁ gleich sind.

3. Verfahren gemäß Anspruch 2, **dadurch gekennzeichnet, dass** R₁, R₃ und R₅ und/oder R₇, R₉ und R₁₁ gleich sind und ausgewählt sind aus linearem oder verzweigtem C₁-C₂₀-Alkyl, vorzugsweise linearem oder verzweigtem C₁-C₁₈-Alkyl, stärker bevorzugt linearem oder verzweigtem C₁-C₁₂-Alkyl und am meisten bevorzugt linearem C₁-C₈-Alkyl.

4. Verfahren gemäß einem der Ansprüche 1 bis 3, **dadurch gekennzeichnet, dass** R₂ und R₄ und/oder R₈ und R₁₀ gleich sind, vorzugsweise R₂ und R₄ und/oder R₈ und R₁₀ von R₁, R₃ und R₅ und/oder R₇, R₉ und R₁₁ verschieden sind.

5. Verfahren gemäß Anspruch 1, **dadurch gekennzeichnet, dass** R₂ und R₄ und/oder R₈ und R₁₀ gleich sind und H sind.

6. Verfahren gemäß einem der Ansprüche 1 bis 5, **dadurch gekennzeichnet, dass** Z ein Halogen ist, vorzugsweise ausgewählt aus Fluor, Chlor, Brom und Jod, vorzugsweise Chlor.

7. Verfahren gemäß einem der Ansprüche 1 bis 6, **dadurch gekennzeichnet, dass** das Metallphosphid ausgewählt ist aus der Gruppe, bestehend aus Ca₃P₂, Zn₃P₂, AIP, Fe₃P und Gemischen davon, vorzugsweise aus der Gruppe, bestehend aus Ca₃P₂, Zn₃P₂, AlP und Gemischen davon.

8. Verfahren gemäß einem der Ansprüche 1 bis 7, **dadurch gekennzeichnet, dass** der Chelatbildner die Fähigkeit besitzt, Kationen wie Ca²⁺, Zn²⁺, Al⁺, Fe³⁺ und Gemische davon zu komplexieren.

9. Verfahren gemäß einem der Ansprüche 1 bis 8, **dadurch gekennzeichnet, dass** der Chelatbildner ausgewählt ist aus der Gruppe, bestehend aus 1,2-Dimethoxyethan (DME), 1,2-Diethoxyethan (DEE), 1,2-Dihydroxypropan, 1,3-Dihydroxypropan, 1,2-Dimethoxypropan, 1,3-Dimethoxypropan, Glycerin, 1,3-Dioxan, 1,4-Dioxan, Tris(2-aminoethyl)amin, Tris[2-(dimethylamino)ethyl]amin, Diethylenglykoldimethylether (Diglyme), Triethylenglykoldimethylether (Triglyme), N,N,N',N'-Tetramethylethylendiamin (TMEDA), Ethylendiamintetraessigsäure (EDTA) und Gemischen davon.

10. Verfahren gemäß einem der Ansprüche 1 bis 9, **dadurch gekennzeichnet, dass** in Schritt a) weiterhin ein Alkohol zugegeben wird, vorzugsweise ein Alkohol, ausgewählt aus der Gruppe, umfassend Methanol, Ethanol, n-Propanol, Isopropanol, n-Butanol, Isobutanol, tert.-Butanol, n-Amylalkohol, sec-Amylalkohol, tert.-Amylalkohol, 3-Methyl-3-pentanol, Ethylenglykol, 1,2,3-Propantriol, Ethanolamin, Diethanolamin, Triethanolamin und Gemischen davon, wobei der Alkohol stärker bevorzugt aus der Gruppe, umfassend tert.-Butanol, sec-Amylalkohol, tert.-Amylalkohol, 3-Methyl-3-pentanol und Gemischen davon, ausgewählt wird.

11. Verfahren gemäß einem der Ansprüche 1 bis 10, **dadurch gekennzeichnet, dass** weiterhin ein Additiv, ausgewählt aus der Gruppe, umfassend Kalium-tert.-butoxid, Trinatrium-α-DL-Alanindiacetat, Trimethylamin, Triethylamin und Gemischen davon, in Schritt a) und/oder b) zugegeben wird.

12. Verfahren gemäß einem der Ansprüche 1 bis 11, **dadurch gekennzeichnet, dass** Schritt a) bei einer Temperatur im Bereich von 10 bis 50 °C, vorzugsweise im Bereich von 12 bis 40 °C, stärker bevorzugt im Bereich von 15 bis 30 °C und am meisten bevorzugt im Bereich von 15 bis 28 °C durchgeführt wird und/oder Schritt b) bei einer Temperatur im Bereich von -5 bis 50 °C, vorzugsweise im Bereich von 0 bis 40 °C, stärker bevorzugt im Bereich von 0 bis 30 °C und am meisten bevorzugt im Bereich von 0 bis 28 °C durchgeführt wird.

13. Verfahren gemäß einem der Ansprüche 1 bis 12, **dadurch gekennzeichnet, dass** das Verfahren einen weiteren Schritt d) des Alkylierens, Alkoxylierens, Alkenylierens, Alkenoxylierens, Arylierens, Acylierens, Carboxylierens, Cycloalkylierens, Cycloalkoxylierens, Arylalkoxylierens, Alkenylarylalkoxylierens oder Hydroxylierens und anschließend des Oxidierens des in Schritt c) erhaltenen Bis(acyl)phosphins der allgemeinen Formel II umfasst, um das Bis(acyl)phosphin der allgemeinen Formel IV zu erhalten 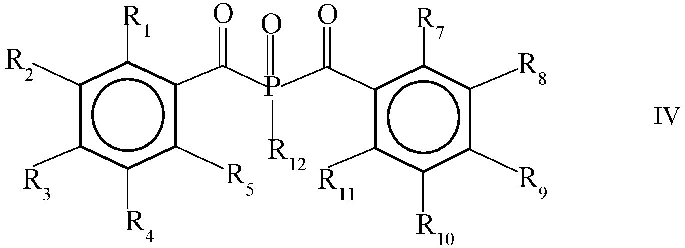 wobei R₁, R₂, R₃, R₄, R₅, R₇, R₈, R₉, R₁₀ und R₁₁ wie vorstehend definiert sind, und R₁₂ ausgewählt ist aus der Gruppe, umfassend OH, lineares oder verzweigtes C₁-C₂₀-Alkyl, lineares oder verzweigtes C₂-C₈-Alkenyl, C₁-C₈-Alkoxy, C₂-C₈-Alkenyloxy, C₃-Cₛ-Cycloalkyl, C₆-C₁₂-Aryl, C₁-C₈-Acyl, C₃-C₈-Cycloalkoxy, C₇-C₁₂-Arylalkoxy, C₉-C₁₅-Alkenylarylalkoxy, Nitro-, C₆-C₁₂-Arylsulfonyl, 4-Alkylarylsulfonyl, C₁-C₂₀-Alkylcarboxy, C₁-C₈-Alkoxycarbonyl und einen O-, S- oder N-haltigen 5- oder 6-gliedrigen heterocyclischen Ring.

14. Das Verfahren gemäß Anspruch 13, **dadurch gekennzeichnet, dass** das Oxidieren unter Verwendung von Wasserstoffperoxid durchgeführt wird.

15. Verfahren gemäß einem der Ansprüche 1 bis 12, **dadurch gekennzeichnet, dass** das Verfahren einen weiteren Schritt d) des Alkylierens, Alkoxylierens, Alkenylierens, Alkenoxylierens, Arylierens, Acylierens, Carboxylierens, Cycloalkylierens, Cycloalkoxylierens, Arylalkoxylierens, Alkenylarylalkoxylierens oder Hydroxylierens des in Schritt c) erhaltenen Mono(acyl)phosphins der allgemeinen Formel I umfasst, um das Mono(acyl)phosphin der allgemeinen Formel V zu erhalten 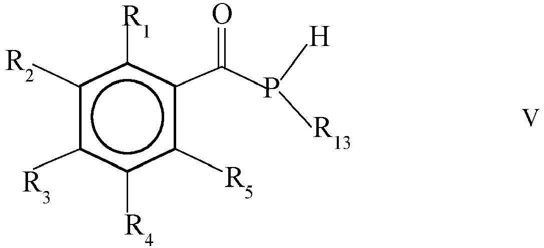 wobei R₁, R₂, R₃, R₄ und R₅ wie vorstehend definiert sind und R₁₃ ausgewählt ist aus der Gruppe, umfassend OH, lineares oder verzweigtes C₁-C₂₀-Alkyl, lineares oder verzweigtes C₂-C₈-Alkenyl, C₁-C₈-Alkoxy, C₂-C₈-Alkenyloxy, C₃-C₈-Cycloalkyl, C₆-C₁₂-Aryl, C₁-C₈-Acyl, C₃-C₈-Cycloalkoxy, C₇-C₁₂-Arylalkoxy, C₉-C₁₅-Alkenylarylalkoxy, Nitro-, C₆-C₁₂-Arylsulfonyl, 4-Alkylarylsulfonyl, C₁-C₂₀-Alkylcarboxy, C₁-C₈-Alkoxycarbonyl und einen O-, S- oder N-haltigen 5- oder 6-gliedrigen heterocyclischen Ring.

## Revendications

1. Procédé pour la préparation d'une mono(acyl)phosphine de formule générale I et/ou d'une bis(acyl)phosphine de formule générale II, 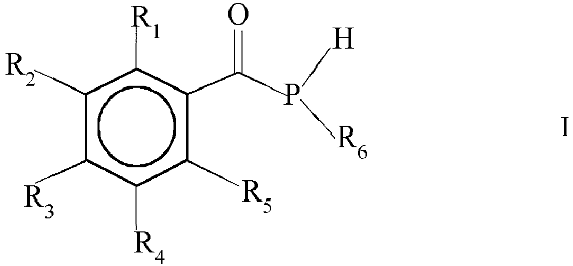
dans laquelle R₁, R₂, R₃, R₄ et R₅ sont identiques ou différents et sont indépendamment choisis parmi H, un halogène, alkyle en C₁ à C₂₀ linéaire ou ramifié, alcényle en C₂ à C₈ linéaire ou ramifié, alcoxy en C₁ à C₈, alcényloxy en C₂ à C₈, cycloalkyle en C₃ à C₈, aryle en C₆ à C₁₂, cycloalcoxy en C₃ à C₈, arylalcoxy en C₇ à C₁₂, alcénylarylalcoxy en C₉ à C₁₅, nitro-, arylsulfonyle en C₆ à C₁₂, 4-alkylarylsulfonyle, alkylcarboxy en C₁ à C₂₀, alcoxycarbonyle en C₁ à C₈, SR₁₄, NHR₁₄ ou NR₁₄R₁₅ où R₁₄ et R₁₅ sont indépendamment choisis parmi H, alkyle en C₁ à C₂₀ linéaire ou ramifié, alcényle en C₂ à C₉ linéaire ou ramifié et cycloalkyle en C₃ à C₈, et un cycle hétérocyclique à 5 ou 6 chaînons contenant 0, S ou N ;
R₆ est H ou R₆ est remplacé par un cation de métal alcalino-terreux ou un cation mixte de métal alcalin/métal alcalino-terreux ; 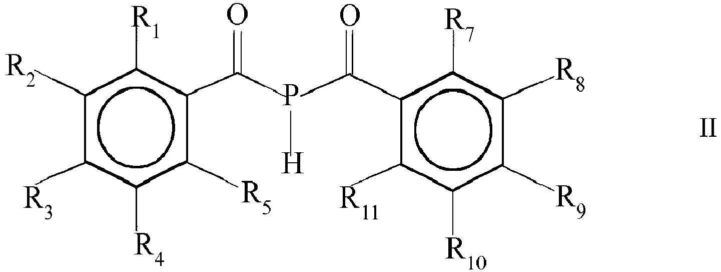 dans laquelle R₁, R₂, R₃, R₄, R₅, R₇, R₈, R₉, R₁₀ et R₁₁ sont identiques ou différents et sont indépendamment choisis parmi H, un halogène, alkyle en C₁ à C₂₀ linéaire ou ramifié, alcényle en C₂ à C₈ linéaire ou ramifié, alcoxy en C₁ à C₈, alcényloxy en C₂ à C₈, cycloalkyle en C₃ à C₈, aryle en C₆ à C₁₂, cycloalcoxy en C₃ à C₈, arylalcoxy en C₇ à C₁₂, alcénylarylalcoxy en C₉ à C₁₅, nitro-, arylsulfonyle en C₆ à C₁₂, 4-alkylarylsulfonyle, alkylcarboxy en C₁ à C₂₀, alcoxycarbonyle en C₁ à C₈, SR₁₄, NHR₁₄ ou NR₁₄R₁₅ où R₁₄ et R₁₅ sont indépendamment choisis parmi H, alkyle en C₁ à C₂₀ linéaire ou ramifié, alcényle en C₂ à C₈ linéaire ou ramifié et cycloalkyle en C₃ à C₈, et un cycle hétérocyclique à 5 ou 6 chaînons contenant 0, S ou N ;
le procédé comprenant les étapes de
a) mise en contact d'un phosphure métallique choisi dans le groupe constitué par Ca₃P₂, Zn₃P₂, AlP, Fe₃P, Ni₃P₂, Sr₃P₂, Ba₃P₂, Co₃P₂, ScP, Ti₃P₄, Sn₃P₄, WP₂, LaP, Pb₃P₂, BiP, et leurs mélanges, ou d'un phosphure métallique mixte qui est un phosphure de fer et de cobalt ou un phosphure de zirconium et de niobium, avec un agent chélatant,
b) mise en contact du mélange obtenu dans l'étape a) avec un composé de formules générales IIIa et/ou IIIb, 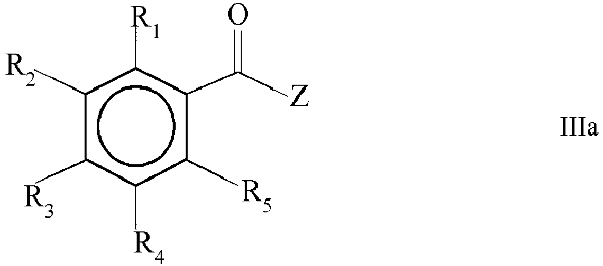 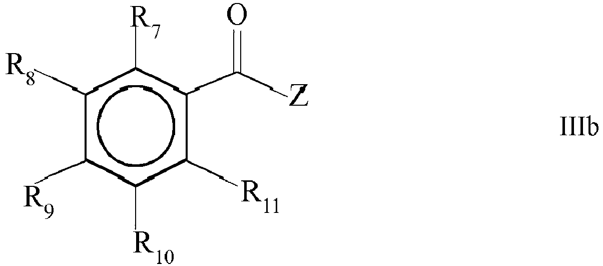 dans lesquelles R₁, R₂, R₃, R4 et R₅ et/ou R₇, R₈, R₉, R₁₀ et R₁₁ sont tels que définis ci-dessus ; Z est choisi parmi un halogène, alkylcarboxy en C₁ à C₂₀, arylcarboxy en C₆ à C₁₂, alcoxy en C₁ à C₈ et aryloxy en C₆ à C₁₂ ; et
c) acidification du mélange obtenu dans l'étape b).

2. Procédé selon la revendication 1, **caractérisé en ce que** R₁, R₃ et R₅ et/ou R₇, R₉ et R₁₁ sont identiques.

3. Procédé selon la revendication 2, **caractérisé en ce que** R₁, R₃ et R₅ et/ou R₇, R₉ et R₁₁ sont identiques et sont choisis parmi alkyle en C₁ à C₂₀ linéaire ou ramifié, de préférence alkyle en C₁ à C₁₈ linéaire ou ramifié, plus préférablement alkyle en C₁ à C₁₂ linéaire ou ramifié, et le plus préférablement alkyle en C₁ à C₈ linéaire.

4. Procédé selon l'une quelconque des revendications 1 à 3, **caractérisé en ce que** R₂ et R₄ et/ou R₉ et R₁₀ sont identiques, de préférence R₂ et R₄ et/ou R₉ et R₁₀ sont différents de R₁, R₃ et R₅ et/ou R₇, R₉ et R₁₁.

5. Procédé selon la revendication 1, **caractérisé en ce que** R₂ et R₄ et/ou R₉ et R₁₀ dont identiques et sont H.

6. Procédé selon l'une quelconque des revendications 1 à 5, **caractérisé en ce que** Z est un halogène, de préférence choisi parmi fluoro, chloro, bromo et iodo, de préférence chloro.

7. Procédé selon l'une quelconque des revendications 1 à 6, **caractérisé en ce que** le phosphure métallique est choisi dans le groupe constitué par Ca₃P₂, Zn₃P₂, AlP, Fe₃P, et leurs mélanges, de préférence dans le groupe constitué par Ca₃P₂, Zn₃P₂, AlP et leurs mélanges.

8. Procédé selon l'une quelconque des revendications 1 à 7, **caractérisé en ce que** l'agent chélatant a la capacité de complexer des cations tels que Ca²⁺, Zn²⁺, Al⁺, Fe³⁺ et leurs mélanges.

9. Procédé selon l'une quelconque des revendications 1 à 8, **caractérisé en ce que** l'agent chélatant est choisi dans le groupe comprenant le 1,2-diméthoxyéthane (DME), le 1,2-diéthoxyéthane (DEE), le 1,2-dihydroxypropane, le 1,3-dihydroxypropane, le 1,2-diméthoxypropane, le 1,3-diméthoxypropane, le glycérol, le 1,3-dioxane, le 1,4-dioxane, la tris(2-aminoéthyl)amine, la tris[2-(diméthylamino)éthyl]amine, l'éther diméthylique de diéthylèneglycol (diglyme), l'éther diméthylique de triéthylèneglycol (triglyme), la N,N,N',N'-tétraméthyléthylènediamine (TMEDA), l'acide éthylènediaminetétraacétique (EDTA), et leurs mélanges.

10. Procédé selon l'une quelconque des revendications 1 à 9, **caractérisé en ce qu'**un alcool est en outre ajouté dans l'étape a), de préférence un alcool choisi dans le groupe comprenant le méthanol, l'éthanol, le n-propanol, l'isopropanol, le n-butanol, l'isobutanol, le tert-butanol, l'alcool n-amylique, l'alcool sec-amylique, l'alcool tert-amylique, le 3-méthyl-3-pentanol, l'éthylèneglycol, le 1,2,3-propanetriol, l'éthanolamine, la diéthanolamine, la triéthanolamine et leurs mélanges, plus préférablement l'alcool est choisi dans le groupe comprenant le tert-butanol, l'alcool sec-amylique, l'alcool tert-amylique, le 3-méthyl-3-pentanol et leurs mélanges.

11. Procédé selon l'une quelconque des revendications 1 à 10, **caractérisé en ce qu'**un additif choisi dans le groupe comprenant le tert-butylate de potassium, le diacétate d'α-DL-alanine trisodique, la triméthylamine, la triéthylamine et leurs mélanges, est en outre ajouté dans les étapes a) et/ou b).

12. Procédé selon l'une quelconque des revendications 1 à 11, **caractérisé en ce que** l'étape a) est mise en œuvre à une température dans la plage de 10 à 50°C, de préférence dans la plage de 12 à 40°C, plus préférablement dans la plage de 15 à 30°C, et le plus préférablement dans la plage de 15 à 28°C, et/ou l'étape b) est mise en œuvre à une température dans la plage de -5 à 50°C, de préférence dans la plage de 0 à 40°C, plus préférablement dans la plage de 0 à 30°C, et le plus préférablement dans la plage de 0 à 28°C.

13. Procédé selon l'une quelconque des revendications 1 à 12, **caractérisé en ce que** le procédé comprend une autre étape d) d'alkylation, alcoxylation, alcénylation, alcénoxylation, arylation, acylation, carboxylation, cycloalkylation, cycloalcoxylation, arylalcoxylation, alcénylarylalcoxylation ou hydroxylation et ensuite d'oxydation de la bis(acyl)phosphine de formule générale II obtenue dans l'étape c) pour que soit obtenue la bis(acyl)phosphine de formule générale IV 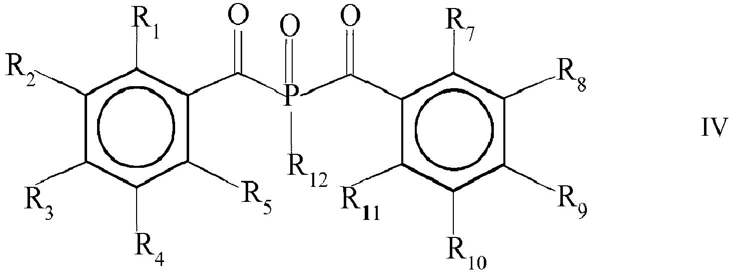 dans laquelle R₁, R₂, R₃, R₄, R₅, R₇, R₈, R₉, R₁₀ et R₁₁ sont tels que définis ci-dessus, et R₁₂ est choisi dans le groupe comprenant OH, alkyle en C₁ à C₂₀ linéaire ou ramifié, alcényle en C₂ à C₈ linéaire ou ramifié, alcoxy en C₁ à C₈, alcényloxy en C₂ à C₈, cycloalkyle en C₃ à C₈, aryle en C₆ à C₁₂, acyle en C₁ à C₈, cycloalcoxy en C₃ à C₈, arylalcoxy en C₇ à C₁₂, alcénylarylalcoxy en C₉ à C₁₅, nitro-, arylsulfonyle en C₆ à C₁₂, 4-alkylarylsulfonyle, alkylcarboxy en C₁ à C₂₀, alcoxycarbonyle en C₁ à C₈ et un cycle hétérocyclique à 5 ou 6 chaînons contenant 0, S ou N.

14. Procédé selon la revendication 13, **caractérisé en ce que** l'oxydation est mise en œuvre par utilisation de peroxyde d'hydrogène.

15. Procédé selon l'une quelconque des revendications 1 à 12, **caractérisé en ce que** le procédé comprend une autre étape d) d'alkylation, alcoxylation, alcénylation, alcénoxylation, arylation, acylation, carboxylation, cycloalkylation, cycloalcoxylation, arylalcoxylation, alcénylarylalcoxylation ou hydroxylation de la mono(acyl)phosphine de formule générale I obtenue dans l'étape c) pour que soit obtenue la mono(acyl)phosphine de formule générale V 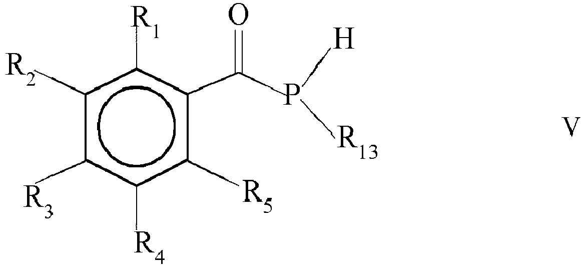 dans laquelle R₁, R₂, R₃, R₄ et R₅ sont tels que définis ci-dessus, et R₁₃ est choisi dans le groupe comprenant OH, alkyle en C₁ à C₂₀ linéaire ou ramifié, alcényle en C₂ à C₈ linéaire ou ramifié, alcoxy en C₁ à C₈, alcényloxy en C₂ à C₈, cycloalkyle en C₃ à C₈, aryle en C₆ à C₁₂, acyle en C₁ à C₈, cycloalcoxy en C₃ à C₈, arylalcoxy en C₇ à C₁₂, alcénylarylalcoxy en C₉ à C₁₅, nitro-, arylsulfonyle en C₆ à C₁₂, 4-alkylarylsulfonyle, alkylcarboxy en C₁ à C₂₀, alcoxycarbonyle en C₁ à C₈ et un cycle hétérocyclique à 5 ou 6 chaînons contenant 0, S ou N.
